# EUROPÄISCHE PATENTSCHRIFT

(11) **EP 3 651 973 B1**
(45) Veröffentlichungstag und Bekanntmachung des Hinweises auf die Patenterteilung: **08.09.2021**
(21) Anmeldenummer: 18736920.2
(22) Anmeldetag: 09.07.2018
(51) Int. Cl.: B29C 65/00, B32B 7/12, B32B 15/20

(54) **VERFAHREN ZUR HERSTELLUNG VON ZUMINDEST ZWEILAGIGEN SCHAUMSTOFFPLATTEN DURCH VERKLEBEN UNTER VERWENDUNG MINDESTENS EINER DÜNNEREN DUROPLASTISCHEN SCHAUMSTOFFPLATTE MIT METALLDECKSCHICHTEN**
METHOD FOR PRODUCING AT LEAST TWO-LAYER FOAM PANELS USING AT LEAST ONE THINNER DUROPLASTIC FOAMED PANEL WITH METAL COVER LAYERS BY MEANS OF BONDING
PROCÉDÉ DE FABRICATION DE PLAQUES DE MOUSSE D'AU MOINS DEUX COUCHES PAR COLLAGE AU MOYEN D'AU MOINS UNE PLAQUE DE MOUSSE THERMODURCISSABLE PLUS FINE POURVUE DE COUCHES DE SURFAÇAGE EN MÉTAL

(30) Priorität: 11.07.2017 EP 17180692
(43) Veröffentlichungstag der Anmeldung: 20.05.2020
(73) Patentinhaber: BASF SE, 67056 Ludwigshafen (DE)
(72) Erfinder: SCHERZER, Dietrich, 67056 Ludwigshafen (DE); TOMASI, Gianpaolo, 49448 Lemfoerde (DE); RENNER, Christian, 49448 Lemfoerde (DE); CLAMOR, Oliver, 49448 Lemfoerde (DE)
(86) Internationale Anmeldenummer: PCT/EP2018/068538
(87) Internationale Veröffentlichungsnummer: WO 2019/011856

(56) Entgegenhaltungen:
- EP-A1- 2 669 073
- DE-U1-202009 001 999

## Beschreibung

Die vorliegende Erfindung betrifft ein Verfahren zur Herstellung von zumindest zweilagigen Schaumstoffplatten durch Verkleben von mindestens einer dünneren thermoplastischen Schaumstoffplatte (TS) und mindestens einer dünneren duroplastischen Schaumstoffplatte (DS) als Ausgangsplatten. Die dünnere duroplastische Schaumstoffplatte (DS) weist an zwei sich gegenüberliegenden Seiten jeweils eine Metalldeckschicht auf, wobei eine Metalldeckschicht in der durch das erfindungsgemäße Verfahren erhaltenen zumindest zweilagigen Schaumstoffplatte nach dem Verkleben sich zwischen jeweils einer der beiden vorgenannten dünneren Ausgangsplatten (TS) und (DS) befindet. Der Klebstoff, mit dem die dünnere thermoplastische Schaumstoffplatte (TS) und die dünnere duroplastische Schaumstoffplatte (DS) miteinander verklebt werden, enthält mindestens eine anorganische Komponente, wobei der Klebstoff mindestens 30 Gew.-%, bezogen auf das Gesamtgewicht des Klebstoffs, Kalziumoxid, Siliciumoxid und/oder Aluminiumoxid enthält. Weiterhin betrifft die vorliegende Erfindung die zumindest zweilagige Schaumstoffplatte als solche sowie deren Verwendung zur Wärmedämmung. Darüber hinaus betrifft sie auch die Außenwand, auf die die zumindest zweilagige Platte aufgebracht ist.

Die Anzahl der Lagen der zumindest zweilagigen Schaumstoffplatte als solche ergibt sich aus der Anzahl der dünneren Schaumstoffplatten (TS) und (DS), die miteinander verklebt werden. Wenn beispielsweise drei dünnere Schaumstoffplatten miteinander verklebt werden, wird eine dreilagige Schaumstoffplatte als solche erhalten, im Fall von vier dünneren Schaumstoffplatten ergibt sich demzufolge eine vierlagige Schaumstoffplatte als solche.

EP-A 1 318 164 betrifft ein Verfahren zur Herstellung von dicken extrudierten Polystyrol-Schaumstoffplatten (XPS-Platten) durch Verbinden zweier oder mehrerer dünner Platten. Die dicken Platten werden erhalten, indem die dünnen Platten an den Flächen, an denen sie verbunden werden sollen, mit einem organischen Lösungsmittel für Polystyrol gleichmäßig benetzt werden. Dadurch wird die Schaumstoffoberfläche angelöst und die Platten können anschließend miteinander verpresst werden. Als Lösungsmittel eignen sich beispielsweise Kohlenwasserstoffe, Alkohole oder Ether, die einen Siedepunkt zwischen 50 und 250 °C aufweisen. Weiterhin können in dem Verfahren gemäß EP-A 1 318 164 die Schäumhäute an den Hauptflächen der miteinander zu verbindenden Platten geschält werden, bevor sie mit dem Lösungsmittel benetzt werden.

EP-A 1 213 119 offenbart ein Verfahren zur Verbindung von mindestens zwei Ausgangsplatten aus thermoplastischem Kunststoffschaum zu einer neuen Platte, wobei die Ausgangsplatten an den Berührungsflächen extrusionshautlos sind und die Verbindung der Ausgangsplatten durch Quellschweißen erfolgt. Zum Quellschweißen werden organische Lösungsmittel eingesetzt, die einen Siedepunkt < 150°C aufweisen, beispielsweise Aceton oder Gemische von organischen Lösungsmitteln mit Wasser.

Extrudierte Kunststoffschaumplatten von großer Dicke werden in DE-A 101 063 41 offenbart. Mit dem darin beschriebenen Verfahren zur Verbindung von mindestens zwei Ausgangplatten aus Kunststoffschaum zu einer neuen Platte können Platten mit einer Mindestdicke von 70 mm hergestellt werden. Vorzugsweise handelt es sich dabei um fluorchlorkohlenwasserstofffreie Polystyrol-Schaumplatten. In dem Verfahren werden die Ausgangsplatten, die an der Berührungsfläche extrusionshautlos sind, miteinander verbunden, indem ein diffusionsoffener Kleber oder mechanische Verbindungselemente verwendet werden. Das Verfahren kann alternativ auch so durchgeführt werden, dass bei teilflächiger Verbindung und stellenweiser Verschweißung oder stellenweiser Verklebung ein nicht diffusionsfähiger Kleber oder nur ein gering diffusionsfähiger Kleber verwendet werden. Als Polystyrol-Schaumplatten eignen sich insbesondere XPS-Platten.

Ein weiteres Verfahren zu Verbindung von mindestens zwei Ausgangsplatten aus Kunststoffschaumplatten zu einer neuen Platte, die vorzugsweise eine Polystyrol-Schaumstoffplatte mit einer Mindestdicke von 70 mm ist, wird in EP-A 1 471 125 offenbart. In diesem Verfahren werden ebenfalls Ausgangsplatten verwendet, die zumindest an der Berührungsfläche extrusionshautlos sind, und es erfolgt eine Verbindung der Ausgangsplatten mit einem diffusionsoffenen Kleber, wobei ein Hot-Melt-Kleber und/oder Reaktionskleber verwendet werden. Der Kleber besteht aus Isocyanat und mindestens einer weiteren Reaktionsgruppe, die ein Harz ist, das im schmelzflüssigen Zustand klebrig ist und der Klebeverbindung eine Frühfestigkeit gibt. Das Isocyanat und das Harz reagieren dabei zu Polyurethan, wodurch die Klebewirkung mit einer Endfestigkeit erzielt wird.

DE-A 44 21 016 offenbart ein Verfahren zur Herstellung von CO₂-geschäumten Kunststoffplatten großer Dicke, insbesondere aus Polystyrol und/oder Polyethylen, wobei eine Doppelung der entsprechenden Ausgangsplatten durch thermisches Verschweißen erfolgt. Das thermische Verschweißen wird mit Hilfe eines Heizschwertes durchgeführt, wodurch die Oberflächen der eingesetzten Kunststoffschaumplatten angeschmolzen werden. Die zu verschweißenden Ausgangsplatten werden über das Heizschwert gezogen, wobei es zu einem direkten Kontakt von Heizschwert und Ausgangsplatten kommt. Das vorzugsweise mit einer Teflonschicht versehene Heizschwert kann elektrisch oder mit einem durchfließenden Heizmedium auf die notwendige Schweißtemperatur gebracht werden, die je nach Kunststoffschaum zwischen 100 und 150 °C beträgt.

EP-A 1 201 838 betrifft eine Dämmplatte für die Wärmeisolierung von Gebäudefassaden. Die zumindest zweischichtige Dämmplatte weist eine erste relativ dünne Materialschicht aus expandiertem Polystyrol auf, wobei im Fall einer dreischichtigen Dämmplatte auch die dritte Schicht der ersten Schicht entspricht, die folglich als Außenflächen der Dämmplatte verwendet werden. Die zweite Schicht der Dämmplatte hat hingegen eine Dicke, die einem Vielfachen der Dicke der ersten und gegebenenfalls der dritten Schicht entspricht, wobei die zweite Schicht aus einem Polyurethanschaum besteht. In EP-A 1 201 838 sind hingegen keine Angaben enthalten, ob es sich bei den jeweiligen Ausgangsplatten der mehrschichtigen Dämmplatte um thermoplastische oder nichtthermoplastische Platten handelt. Ebenso wenig ist dort offenbart, dass sich zwischen den einzelnen Ausgangsplatten auch Metalldeckschichten befinden können. Die jeweiligen Dämmplatten werden aus den entsprechenden Ausgangsplatten beim Herstellungsprozess in situ miteinander verbunden, wobei die auf das Polyurethan basierende Schicht gleichzeitig als Klebeschicht fungiert. Ein Verkleben von bereits fertigen Ausgangsplatten ist in EP-A 1 201 838 ebenfalls nicht beschrieben.

CH-A 706 454 betrifft eine Dämmplatte und ein Verfahren zur Herstellung einer Dämmplatte. Die Dämmplatte wird zur Wärmeisolation von Außenfassaden, Wänden oder anderen Teilen von Gebäuden verwendet und basiert auf expandiertem Polystyrol (EPS). Die Dämmplatte kann mehrteilig sein und umfasst eine EPS-Hauptplatte und zumindest eine Deckplatte, die auf der Vorder- oder Rückseite der Hauptplatte angeordnet ist. Die Hauptplatte ist in Folge athermaner Bestandteile, insbesondere Graphitpartikeln, dunkel gefärbt, während die entsprechende Deckplatte, die ebenfalls auf EPS basiert, hell bis weiß erscheint, was durch die Zugabe anderer atherman wirkender Stoffe, insbesondere Titandioxid, erzielt wird. Die einzelnen Ausgangsplatten der Dämmplatte können auf beliebige Weise miteinander verbunden werden, beispielsweise durch thermisches Verschweißen, durch Quellschweißen (unter Verwendung eines Lösungsmittels) oder unter Verwendung eines Klebstoffs. In CH-A 706 454 wird jedoch nicht offenbart, dass, außer auf expandiertem Polystyrol (EPS) basierten Ausgangsplatten, auch andere Ausgangsplatten verwendet werden können.

DE 20 2009 001 999 U1 betrifft eine Dämmplatte, die aus zwei unterschiedlichen miteinander verbundenen Kunststoffschichten besteht und für Fassaden, Decken oder dergleichen eingesetzt werden kann. Bei der Kernschicht handelt es sich um eine Polyurethanschicht, die auf beiden Seiten mit einer Folie aus Aluminium abgedeckt sein kann und durch je eine Deckschicht aus Polystyrol kaschiert ist. Die Deckschicht wird mithilfe eines Polyurethan-Klebers auf die beiden Aluminiumfolien aufgeklebt. EP-A 2 669 073 betrifft ein Verfahren zur Herstellung von zumindest zweilagigen Schaumstoffplatten durch Verkleben von mindestens zwei dünneren Schaumstoffplatten zu der zumindest zweilagigen Schaumstoffplatte, wobei auf mindestens einer Oberfläche von mindestens einer dünneren Schaumstoffplatte ein Gemisch enthaltend mindestens einen Klebstoff und mindestens ein Flammschutzmittel aufgebracht wird. Der mindestens eine Klebstoff ist vorzugsweise ein Polyurethanklebstoff und/oder ein Schmelzklebstoff.

DE-A 10 2012 023 180 betrifft ein Verfahren zur Herstellung von zumindest zweilagigen Schaumstoffplatten durch Verkleben von mindestens zwei dünneren Schaumstoffplatten, wobei auf mindestens einer Oberfläche von mindestens einer dünneren Schaumstoffplatte mindestens ein Schmelzkleber aufgebracht wird. Der Schmelzkleber umfasst mindestens ein Polymer, wie beispielsweise Polyvinylacetat oder Ethylen-Vinylacetat-Copolymere, und wird vorzugsweise im Gemisch mit einem feuchtigkeitshärtenden Polyurethan-Schmelzklebstoff eingesetzt.

DE 20 2009 001999 betrifft eine Dämmplatte mit wenigstens zwei miteinander verbundenen Kunststoffschichten zur Wärmedämmung von Fassaden, Decken oder dergleichen, gekennzeichnet durch eine Kernschicht aus Polyurethan, die auf beiden Seiten durch je eine Deckschicht aus Polystyrol kaschiert ist. Die Dämmplatte kann so ausgeführt sein, dass die Kernschicht auf beiden Seiten von einer Folie aus Aluminium abgedeckt ist, auf die die Deckschichten aufgeklebt sind. Die Deckschichten werden vorzugsweise mittels eines PU-Klebers auf die Folie aufgeklebt.

Im Stand der Technik ist somit nirgendwo offenbart, dass auch zumindest zweilagige Platten durch Verkleben einer dünneren thermoplastischen und einer dünneren duroplastischen Schaumstoffplatte hergestellt werden können, wobei der dabei verwendete Klebstoff mindestens eine anorganische Komponente enthält.

Die der vorliegenden Erfindung zugrunde liegende Aufgabe besteht in der Bereitstellung eines neuen Verfahrens zur Herstellung von zumindest zweilagigen Schaumstoffplatten bzw. in den zumindest zweilagigen Schaumstoffplatten als solchen, wobei diese Platten sich durch niedrige Wärmeleitfähigkeit und gute Verarbeitbarkeit auszeichnen sollen.

Gelöst wird die Aufgabe durch ein Verfahren zur Herstellung einer zumindest zweilagigen Schaumstoffplatte durch Verkleben von mindestens einer dünneren thermoplastischen Schaumstoffplatte (TS) und mindestens einer dünneren duroplastischen Schaumstoffplatte (DS), wobei die dünnere duroplastische Schaumstoffplatte (DS) an zwei sich gegenüberliegenden Seiten jeweils eine Metalldeckschicht aufweist, wobei die dünnere thermoplastische Schaumstoffplatte (TS) und die dünnere duroplastische Schaumstoffplatte (DS) so miteinander verklebt werden, dass in der zumindest zweilagigen Schaumstoffplatte sich eine Metalldeckschicht zwischen der dünneren thermoplastischen Schaumstoffplatte (TS) und der dünneren duroplastischen Schaumstoffplatte (DS) befindet und wobei der Klebstoff, mit dem die dünnere thermoplastische Schaumstoffplatte (TS) und die dünnere duroplastische Schaumstoffplatte (DS) miteinander verklebt werden, mindestens eine anorganische Komponente enthält, wobei der Klebstoff mindestens 30 Gew.-%, bezogen auf das Gesamtgewicht des Klebstoffs, Kalziumoxid, Siliciumoxid und/oder Aluminiumoxid enthält.

Die mit dem erfindungsgemäßen Verfahren hergestellten zumindest zweilagigen Schaumstoffplatten zeichnen sich dadurch aus, dass die vorteilhaften Eigenschaften der einzelnen Ausgangsplatten miteinander kombiniert werden können, sodass zwei- oder mehrlagige Schaumstoffplatten mit auf das jeweilige Anforderungsprofil maßgeschneiderten Materialeigenschaften bereitgestellt werden können.

Schaumstoffplatten, die mit Metalldeckschichten versehen sind, werden auch als "kaschierte Schaumstoffplatten" bezeichnet. Im Rahmen der vorliegenden Erfindung weist die dünnere duroplastische Schaumstoffplatte (DS) an zwei sich gegenüberliegenden Seiten jeweils eine Metalldeckschicht auf, die dünnere duroplastische Schaumstoffplatte (DS) ist somit eine kaschierte Schaumstoffplatte. Voraussetzung ist, dass die dünnere duroplastische Schaumstoffplatte (DS) an mindestens zwei sich gegenüberliegenden Seiten eine solche Metalldeckschicht aufweist. Gegebenenfalls können solche Metalldeckschichten oder auch andere diffusionsdichte Schichten noch auf weiteren Seiten der dünneren duroplastischen Schaumstoffplatte (DS) aufgebracht sein, wobei sich diese weiteren Seiten nicht zwingend gegenüberliegen müssen.

Durch die Kaschierung, die vorzugsweise diffusionsdicht ist, wird insbesondere bewirkt, dass in den jeweiligen Schaumstoffplatten vorhandenes Treibmittel am Ausdiffundieren (möglichst vollständig) gehindert bzw. dieser Diffusionsprozess deutlich verzögert wird. Dabei ist es nicht zwingend erforderlich, dass alle Seiten der dünneren duroplastischen Schaumstoffplatte (DS) mit einer solchen Kaschierung, also einer Metalldeckschicht, versehen sind, weil über das gesamte Plattenvolumen gesehen, der Weg für die Hauptmenge des in der jeweiligen Platte, insbesondere in den Poren, enthaltenen Treibmittels zu weiter entfernten, nicht kaschierten Seiten zu weit ist, so dass das Treibmittel größtenteils durch die Metalldeckschicht in den Poren zurückgehalten wird.

Vorzugsweise sind die Metalldeckschichten demzufolge auf den beiden flächenmäßig größten sich gegenüberliegenden Seiten der dünneren duroplastischen Schaumstoffplatte (DS) aufgebracht. Das Ausdiffundieren von Treibmittel aus nichtkaschierten Seiten der dünneren duroplastischen Schaumstoffplatte (DS) ist insbesondere dann vernachlässigbar, wenn die entsprechenden Seiten flächenmäßig kleiner als die kaschierten Seiten sind. Gegebenenfalls können aber auch diese Seiten mit Metalldeckschichten oder sonstigen Schutzschichten, zum Beispiel Epoxidharzschutzschichten, versehen werden, um auch ein Ausdiffundieren des Treibmittels an den Randbereichen der entsprechenden Schaumstoffplatte (vollständig) zu verhindern bzw. (weiter) zu verzögern.

Diese zwei- oder mehrlagigen Schaumstoffplatten zeichnen sich insbesondere durch niedrige Wärmeleitfähigkeit und/oder eine gute Verarbeitbarkeit aus.

So sind beispielsweise thermoplastische Schaumstoffplatten ohne (weitgehend) diffusionsdichte Kaschierung in der Regel zur Wärmeisolation/Wärmedämmung aufgrund ihrer höheren Wärmeleitfähigkeiten (höherer Wärmeleitfähigkeitswert λ) weniger gut geeignet als beispielsweise Schaumstoffe mit einer vorzugsweise diffusionsdichten Kaschierung, da bei diesen die eingesetzten Treibmittel mit vorzugsweise niedriger Wärmeleitfähigkeit nicht hinausdiffundieren können. Als diffusionsdichte Kaschierung wird vorzugsweise Aluminium, beispielsweise in Form von Aluminiumfolie, verwendet.

Durch die Kaschierung mit Deckschichten sind die jeweiligen Schaumstoffplatten aber schlecht zu verarbeiten, da die Haftung von zum Beispiel Verputzen auf diesen Metalldeckschichten sehr schlecht ist.

Im Gegensatz dazu können thermoplastische Schaumstoffplatten ohne Kaschierung gut verarbeitet werden, wodurch deren Anwendung beispielsweise im Bauwesen sehr vorteilhaft ist, weil diese Platten über eine gute Anhaftung an Putz oder sonstigen Beschichtungen verfügen. Weiterhin sind solche thermoplastischen Schaumstoffplatten auch besonders unempfindlich gegen Beschädigungen, wodurch auch eine Stabilisierung der zumindest zweilagigen Schaumstoffplatte erzielt wird.

Im Gegensatz dazu ist die Anhaftung von nichtthermoplastischen Schaumstoffplatten, insbesondere duroplastischen Schaumstoffplatten, wie Polyurethanhartschaumplatten, die zudem über Metalldeckschichten verfügen, an Putz oder sonstigen Beschichtungen relativ schlecht. Die Wärmedämmungseigenschaften solcher Schaumstoffplatten, die zudem über Metalldeckschichten verfügen, sind hingegen deutlich besser als diejenigen der Schaumstoffplatten ohne Beschichtung.

Demzufolge können durch die vorliegende Erfindung auf einfache Weise zumindest zweilagige Schaumstoffplatten bereitgestellt werden, die als Dämmmaterialien mit niedrigen Wärmeleitfähigkeiten eingesetzt werden können und die zudem die von Standardschaumstoffen bekannten Eigenschaften, wie gute Putzhaftung, mechanische Unempfindlichkeit, leichte Verarbeitbarkeit und/oder Verfügbarkeit in beliebigen Dicken aufweisen.

Darüber hinaus führt das Zusammenfügen der einzelnen dünneren Ausgangsplatten (TS) und (DS) durch Verkleben zu stabilen zumindest zweilagigen Schaumstoffplatten, die eine hohe Zugfestigkeit von > 0,15 N/mm² aufweisen.

Die zwei- oder mehrlagigen Platten weisen neben einer guten Verarbeitbarkeit, einer hohen Stabilität und einer niedrigen Wärmeleitfähigkeit auch vorteilhafte Eigenschaften im Zusammenhang mit einer verringerten Brennbarkeit sowie dem Erfüllen von Brandtests auf.

Die erfindungsgemäßen zumindest zweilagigen Platten unterschreiten vorzugsweise bei dem Brandtest gemäß EN ISO 11925-2 (2010) die im Rahmen der Baustoffklassifizierung gemäß DIN EN 13501-1 (2010) genannte Grenze hinsichtlich der Flammhöhe, die für die Einstufung in Klasse B relevant ist. Das verbesserte Flammverhalten ist dabei insbesondere auf den Klebstoff zurückzuführen, der mindestens eine anorganische Komponente enthält. Die erfindungsgemäßen Platten zeigen somit im Gegensatz zu zweilagigen Schaumstoffplatten, die beispielsweise mittels Polyurethan-Kleber verklebt werden, ein deutlich reduziertes Brandverhalten.

Der Klebstoff, der mindestens eine anorganische Komponente enthält, zeichnet sich weiterhin durch eine einfache Handhabung aus. Er muss nicht, wie etwa ein *hot-melt-*Kleber, vor der Verwendung erhitzt werden, sondern kann direkt bei Raumtemperatur auf die entsprechenden Oberflächen der Ausgangsplatten aufgebracht werden.

Im Rahmen der vorliegenden Erfindung wird unter den Begriffen "Thermoplast" oder "thermoplastische Schaumstoffplatte" folgendes verstanden. Thermoplaste, auch Plastomere genannt, sind polymere Kunststoffe, die sich in einem bestimmten Temperaturbereich (thermoplastisch) verformen lassen. Dieser Vorgang ist prinzipiell reversibel, das heißt er kann durch Abkühlung und Wiedererwärmung bis in den schmelzflüssigen Zustand mehrfach wiederholt werden. Thermoplastische Schaumstoffplatten sind folglich Schaumstoffe in Plattenform, die über die vorgenannten Polymereigenschaften eines Thermoplasten verfügen. Eine thermoplastische Schaumstoffplatte ist überwiegend, also zu mindestens 50 Gew.-%, aus mindestens einem Thermoplast hergestellt (bezogen auf das Gesamtgewicht der jeweiligen Platten). Gegebenenfalls können noch weitere Materialien/Komponenten in der thermoplastischen Schaumstoffplatte enthalten sein, die selbst keine Thermoplasten sind. Vorzugsweise ist die thermoplastische Schaumstoffplatte vollständig oder nahezu vollständig (mindestens 95 Gew.-%) aus mindestens einem Thermoplast hergestellt.

Im Rahmen der vorliegenden Erfindung wird unter den Begriffen "Duroplast", "duroplastisches Aushärten" oder "duroplastische Schaumstoffplatte" folgendes verstanden. Duroplaste, auch Duromere genannt, sind erhältlich durch (duroplastisches) Aushärten der entsprechenden Ausgangsmaterialien. In der Regel enthalten die für die Herstellung eines Duroplasten durch duroplastisches Aushärten verwendeten Ausgangsmaterialien mindestens zwei unterschiedliche Komponenten. Die erste Komponente ist häufig ein Polymer oder gegebenenfalls die entsprechenden Monomere, aus denen das jeweilige Polymer gebildet werden kann. Die zweite Komponente wird auch als Vernetzer bezeichnet, sie reagiert chemisch mit der ersten Komponente, wodurch sie ein Vernetzen der ersten Komponente, vorzugsweise von Polymerketten, bewirkt. Die Vernetzung erfolgt vorzugsweise dreidimensional. Die Duroplaste bilden somit nach dem Aushärtungsvorgang eine stabile Struktur aus, die nicht oder nur sehr schwer verformt werden kann. Duroplastische Schaumstoffplatten sind folglich Schaumstoffe in Plattenform, die über die vorgenannten Polymereigenschaften eines Duroplasten verfügen.

Im Rahmen der vorliegenden Erfindung wird unter dem Begriff "Klebstoff, der mindestens eine anorganische Komponente enthält" folgendes verstanden. Der Klebstoff kann sowohl genau eine anorganische Komponente als auch Mischungen aus zwei und mehreren anorganischen Komponenten enthalten. Beispiele für anorganische Komponenten sind anorganische Salze wie beispielsweise Kalziumoxid, Siliciumoxid oder Kalziumhydroxid.

Der Klebstoff kann gegebenenfalls noch weitere Materialien/Komponenten enthalten, die selbst keine anorganischen Komponenten sind. Beispiele für Materialien/Komponenten, die selbst keine anorganischen Komponenten sind, sind Wasser oder organische Komponenten. Beispiele für organische Komponenten sind organische Komponenten auf Polymerbasis wie beispielsweise organische Klebstoffe. Diese können als Additive im Klebstoff enthalten sein. Vorzugsweise enthält der Klebstoff jedoch keine organischen Klebstoffe, besonders bevorzugt enthält er keine Polyurethan-Klebstoffe.

Nachfolgend werden das erfindungsgemäße Herstellungsverfahren der zumindest zweilagigen Platten sowie die erfindungsgemäßen zumindest zweilagigen Platten als solche näher definiert.

Die mit dem erfindungsgemäßen Verfahren hergestellte Schaumstoffplatte (Platte) ist zumindest zweilagig, sie kann also genau zwei Lagen aufweisen oder dreilagig, vierlagig, fünflagig oder noch höherlagig sein. Wie vorstehend bereits ausgeführt, ergibt sich die Anzahl der Lagen der Platte als solche aus der Anzahl der dünneren Platten (TS) und (DS), die miteinander verklebt werden. Die dünneren Platten werden auch als "Ausgangsplatten" bezeichnet. Im Falle einer zweilagigen Schaumstoffplatte als solche werden also zwei dünnere Platten, eine erste dünnere thermoplastische Platte (TS) und eine zweite dünnere duroplastische Platte (DS), miteinander verklebt. Bei einer drei- oder vierlagigen Platte als solche werden somit drei bzw. vier dünnere Platten miteinander verklebt.

Sofern noch höherlagige Platten als solche hergestellt werden sollen, beispielsweise eine zehnlagige Platte, muss demzufolge die der Anzahl der Lagen entsprechende Anzahl an dünneren Platten (TS) und (DS), beispielsweise zehn dünnere Platten, miteinander verklebt werden. Vorzugsweise ist die erfindungsgemäße Platte zweilagig, dreilagig oder vierlagig, insbesondere ist die erfindungsgemäße Platte dreilagig. Das Verkleben wird weiter unten im Text im Zusammenhang mit dem erfindungsgemäßen Herstellungsverfahren näher definiert.

Voraussetzung bei jeder zumindest zweilagigen Schaumstoffplatte, die nach dem erfindungsgemäßen Verfahren hergestellt wird, ist, dass in der entsprechenden Anzahl an Lagen (also die konkrete Anzahl an dünneren Ausgangsplatten (DS) und (TS)) immer mindestens eine dünnere thermoplastische Schaumstoffplatte (TS) und mindestens eine dünnere duroplastische Schaumstoffplatte (DS) als Ausgangsplatten verwendet werden. Während die dünnere Ausgangsplatte (TS) zwingend thermoplastisch ist, ist die dünnere Ausgangsplatte (DS) zwingend duroplastisch. Die dünnere duroplastische Schaumstoffplatte (DS) weist allerdings an zwei sich gegenüberliegenden Seiten jeweils eine Metalldeckschicht auf. Jede dünnere duroplastische Schaumstoffplatte (DS) weist somit zwingend mindestens zwei Metalldeckschichten auf. Gegebenenfalls können auch mehr als zwei Seiten der entsprechenden Ausgangsplatte über eine entsprechende Metalldeckschicht verfügen, maximal alle sechs Seiten der entsprechenden Ausgangsplatte.

Erfindungsgemäß werden die an den jeweiligen duroplastischen Ausgangsplatten (DS) zwingend vorhandenen mindestens zwei Metalldeckschichten nicht bei der Festlegung/Definition der Anzahl der Lagen mitberücksichtigt. Die Anzahl der Lagen in einer zumindest zweilagigen Schaumstoffplatte ergibt sich somit nur aus der Anzahl der dabei eingesetzten dünneren Ausgangsplatten (DS) und (TS). Erfindungsgemäß ist es bevorzugt, dass bei drei- oder höherlagigen Schaumstoffplatten immer abwechselnd eine dünnere thermoplastische Ausgangsplatte (TS) und eine dünnere duroplastische Ausgangsplatte (DS) bei der entsprechenden Herstellung eingesetzt werden. Im Fall einer ungeraden Anzahl an Lagen (beispielsweise dreilagig oder fünflagig) ist es weiterhin bevorzugt, dass die Anzahl an thermoplastischen Ausgangsplatten (TS) um eins höher ist als die entsprechende Anzahl der dünneren duroplastischen Ausgangsplatten (DS).

In einer bevorzugten Ausführungsform der Erfindung wird eine dreilagige Schaumstoffplatte hergestellt durch Verkleben von zwei dünneren thermoplastischen Schaumstoffplatten (TS) und einer dünneren duroplastischen Schaumstoffplatte (DS), die an zwei sich gegenüberliegenden Seiten jeweils eine Metalldeckschicht aufweist, wobei jeweils eine dünnere thermoplastische Schaumstoffplatte (TS) auf jeweils einer sich gegenüberliegenden Seite der dünneren duroplastischen Schaumstoffplatte (DS) unter Erhalt der dreilagigen Schaumstoffplatte aufgeklebt wird, und sich jeweils eine Metalldeckschicht zwischen der jeweiligen dünneren thermoplastischen Schaumstoffplatte (TS) und der dünneren duroplastischen Schaumstoffplatte (DS) befindet.

In einer weiteren bevorzugten Ausführungsform der vorliegenden Erfindung wird aus einer vorstehend beschriebenen dreilagigen Schaumstoffplatte eine vier- oder höherlagige Schaumstoffplatte durch Verkleben hergestellt. Dabei wird, ausgehend von der vorstehend beschriebenen dreilagigen Schaumstoffplatte, eine zweite dünnere duroplastische Schaumstoffplatte (DS), die an zwei sich gegenüberliegenden Seiten jeweils eine Metalldeckschicht aufweist, auf eine von einer dünneren thermoplastischen Schaumstoffplatte (TS) stammenden Seite der dreilagigen Schaumstoffplatte aufgeklebt, wobei die daraus erhaltene vierlagige Schaumstoffplatte abwechselnd insgesamt vier Lagen aus dünneren thermoplastischen Schaumstoffplatten (TS) und dünneren duroplastischen Schaumstoffplatten (DS) aufweist, und sich jeweils eine Metalldeckschicht zwischen einer Lage aus dünnerer thermoplastischer Schaumstoffplatte (TS) und einer Lage aus dünnerer duroplastischer Schaumstoffplatte (DS) befindet, und die erste und zweite dünnere duroplastische Schaumstoffplatte (DS) sich auf jeweils einer gegenüberliegenden Seite einer dünneren thermoplastischen Schaumstoffplatte (TS) befinden. Gegebenenfalls wird zum Erhalt von höherlagigen Schaumstoffplatten das abwechselnde Aufkleben einer weiteren dünneren thermoplastischen Schaumstoffplatte (TS) oder einer dünneren duroplastischen Schaumstoffplatte (DS), die an zwei sich gegenüberliegenden Seiten jeweils eine Metalldeckschicht aufweist, mindestens einfach wiederholt.

Die zum Verkleben verwendeten dünneren Ausgangsplatten (TS) und (DS) entsprechen hinsichtlich ihrer chemischen Zusammensetzung den im Rahmen der vorliegenden Erfindung hergestellten zumindest zweilagigen Platten als solche. Bei dieser Betrachtungsweise werden jedoch die Klebstoffe, die auf die jeweiligen Oberflächen der dünneren Ausgangsplatten aufgebracht werden, nicht berücksichtigt. Die jeweils miteinander zu verklebenden dünneren Ausgangsplatten weisen vorzugsweise dieselben Dimensionen auf. Vorzugsweise erfolgt das Verkleben an den jeweils flächenmäßig größten Seiten der jeweiligen Ausgangsplatten.

Die Dimensionierung der miteinander zu verklebenden dünneren Platten (TS) und (DS) ist beliebig. Hinsichtlich ihrer Länge und Breite können sie Maße im Zentimeterbereich bis hin zu mehreren Metern aufweisen. Hinsichtlich ihrer dritten Dimension (Dicke) sind theoretisch ebenfalls beliebige Maße denkbar. In der Praxis weisen die dünneren Platten eine Dicke im Bereich von 5 bis 300 mm auf. Bei den Angaben zur Plattendicke ist im Fall einer dünneren duroplastischen Ausgangsplatte (DS) die Dicke der beiden Metalldeckschichten bei den vor- bzw. nachstehenden Angaben nicht berücksichtigt. Die Dicke dieser Metalldeckschichten kann zwar prinzipiell beliebig sein, vorzugsweise ist sie jedoch nur ein Bruchteil der Dicke der duroplastischen Platte (DS), vorzugsweise ist die Dicke der Metalldeckschicht < 1 mm, insbesondere < 0,1 mm.

Bezogen auf ein rechtwinkliges Koordinatensystem wird erfindungsgemäß die Länge einer Ausgangsplatte bzw. einer zumindest zweilagigen Platte als solche auch als "X-Richtung" bezeichnet, die entsprechende Breite als "Y-Richtung" und die Dicke als "Z-Richtung". Die Dicke der zumindest zweilagigen Platte steigt mit zunehmender Anzahl von verbundenen Ausgangsplatten kontinuierlich an.

Die vorstehend bzw. nachfolgend angegebenen Werte hinsichtlich der Dicke der dünneren Platten (TS) und (DS) beziehen sich auf die entsprechenden Werte einer Ausgangsplatte, die für sich genommen noch keinen Verklebungsschritt erfahren hat.

Die Dicke der im erfindungsgemäßen Verfahren hergestellten zumindest zweilagigen Platten ergibt sich somit aus der Gesamtdicke der insgesamt eingesetzten dünneren Platten (Ausgangsplatten) sowie der diesbezüglich aber vernachlässigbaren Dicke der Metalldeckschichten. Wenn im Rahmen des Herstellungsverfahrens ein Verpressungsschritt mit der Übertragung einer großen Energiemenge durchgeführt wird, ist die Dicke der zumindest zweilagigen Platte als solche vorzugsweise geringer als die Summe der jeweiligen Dicken der eingesetzten Ausgangsplatten.

Vorzugsweise weist die mindestens eine dünnere thermoplastische Schaumstoffplatte (TS) eine Länge (X-Richtung) von 500 bis 2 800 mm, vorzugsweise von 1 000 bis 1 500 mm, eine Breite (Y-Richtung) von 200 bis 1 250 mm, vorzugsweise von 500 bis 900 mm, und eine Dicke (Z-Richtung) von 5 bis 100 mm, vorzugsweise von 5 bis 50 mm, auf.

Vorzugsweise weist die dünnere duroplastische Schaumstoffplatte (DS) eine Länge (X-Richtung) von 500 bis 2 800 mm, vorzugsweise von 1 000 bis 1 500 mm, eine Breite (Y-Richtung) von 200 bis 1 250 mm, vorzugsweise von 500 bis 900 mm, und eine Dicke (Z-Richtung) von 20 bis 200 mm, vorzugsweise von 40 bis 160 mm, auf.

Weiterhin ist es bevorzugt, dass jede Metalldeckschicht eine Länge (X-Richtung) und eine Breite (Y-Richtung) aufweist, die identisch ist mit den entsprechenden Werten der dünneren duroplastischen Schaumstoffplatte (DS), die Dicke (Z-Richtung) jedoch 0,01 bis 0,1 mm, vorzugsweise 0,02 bis 0,06 mm, beträgt.

Weiterhin ist es bevorzugt, dass jede dünnere thermoplastische Schaumstoffplatte (TS), jede dünnere duroplastische Schaumstoffplatte (DS) und jede Metalldeckschicht identische Werte für die Länge (X-Richtung) und die Breite (Y-Richtung) aufweisen.

Die erfindungsgemäßen zumindest zweilagigen Schaumstoffplatten bzw. die entsprechenden Ausgangsplatten können beliebige Werte hinsichtlich ihres mittleren Zelldurchmessers (auch als "Zellgröße" oder "mittlere Zellgröße" bezeichnet) aufweisen. Die jeweiligen Werte der Ausgangsplatten finden sich auch in den erfindungsgemäßen Schaumstoffplatten wieder, das heißt, sie werden durch das Verkleben nicht verändert. Allerdings ist es bevorzugt, dass die Zellgröße der Schaumstoffplatte < 300 µm, vorzugsweise < 200 µm und ganz besonders bevorzugt < 150 µm ist.

Vorzugsweise weisen die dünneren Schaumstoffplatten (TS) und (DS) einen mittleren Zelldurchmesser ≥ 10 µm, mehr bevorzugt ≥ 50 µm, auf. Der mittlere Zelldurchmesser kann nach der Norm "ASTM D 3576" ("Bestimmung der Zellgröße von harten Schaumstoffen"; Ausgabe 2015), also nach dem Fachmann bekannten Methoden, gemessen werden. Die spezifischen Werte des mittleren Zelldurchmessers in einer konkreten Platte können nach dem Fachmann bekannten Methoden eingestellt werden, beispielsweise durch die gewählten Druck- oder Temperaturwerte bei der Plattenherstellung und/oder die Art oder Menge des Treibmittels, beispielsweise während des Extrusionsverfahrens.

Vorzugsweise weist die zumindest zweilagige Schaumstoffplatte eine Wärmeleitfähigkeit λ ≤ 0,035 W/(mK), mehr bevorzugt ≤ 0,030 W/(mK), insbesondere ≤ 0,025 W/(mK), auf. Die entsprechenden Wärmeleitfähigkeitswerte gelten dabei für die gesamte zumindest zweilagige Schaumstoffplatte, vorzugsweise für eine zweilagige oder eine dreilagige Schaumstoffplatte. Die Wärmeleitfähigkeit der ganzen zumindest zweilagigen Platte wird nach EN 12 667 oder EN 12 939 bei einer Mitteltemperatur von 10 +/- 0,3 °C gemessen (nach Lagerung von 6 h bei 23 °C und 50 % Luftfeuchte).

Die dünneren thermoplastischen Schaumstoffplatten (TS) als solche sind dem Fachmann prinzipiell bekannt. Geeignete thermoplastische Schaumstoffplatten sind beispielsweise in Form von Blends in der WO 2009/047489 offenbart. Beispielsweise können Platten aus amorphen, kristallinen oder teilkristallinen thermoplastischen Schaumstoffen eingesetzt werden.

Vorzugsweise ist die dünnere thermoplastische Schaumstoffplatte (TS) ein Partikelschaumstoff oder ein Extrusionsschaumstoff auf Basis mindestens eines Polymers, ausgewählt aus der Gruppe bestehend aus Polystyrol, Polystyrolcopolymeren, Polyethersulfon, Polysulfon, Polyethylenterephthalat, thermoplastischem Polyurethan, Polyolefinen, Polyolefincopolymeren und Acrylpolymeren, vorzugsweise ein Extrusionsschaumstoff auf Basis mindestens eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Extrusionsschaumstoff auf Basis mindestens eines Polymers, ausgewählt aus der Gruppe bestehend aus Polystyrol, Polystyrolcopolymeren und Polyethylenterephthalat.

Geeignete Polyolefine sind beispielsweise Polyethylen und/oder Polypropylen.

Polystyrolcopolymere werden auch als "aus Styrol hergestellte Copolymere" oder als "Styrolcopolymerisate" bezeichnet. Ist das in der dünneren thermoplastischen Schaumstoffplatte (TS) üblicherweise enthaltene Polymer ein Polystyrolcopolymer, bedeutet dies, dass zur Herstellung des Polymers, neben dem monomeren Styrol, mindestens ein weiteres Monomer (Comonomer) erforderlich ist. Als Comonomere zu Styrol eignen sich prinzipiell alle mit Styrol polymerisierbaren Monomere. Vorzugsweise sind mindestens 50 Gew.-% Styrol in dem Polystyrolcopolymer einpolymerisiert, bezogen auf das Gesamtgewicht des Polystyrolcopolymers.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureestern, Methacrylsäureestern, N-Vinylverbindungen, Maleinsäureanhydrid, Butadien, Divinylbenzol und Butandioldiacrylat. Acrylsäureester sowie Methacrylsäureester sind vorzugsweise erhältlich aus Alkoholen mit einem bis acht Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-Styrol-Copolymere (ABS).

Ist die dünnere thermoplastische Schaumstoffplatte (TS) ein Partikelschaumstoff, so ist der Partikelschaumstoff vorzugsweise Styropor, Neopor oder E-Por, die kommerziell von der BASF SE erhältlich sind. In diesem ist das Polymer ein Polystyrol, ein Polystyrolcopolymer oder eine Mischung aus Polystyrol oder einem Polystyrolcopolymer mit mindestens einem weiteren Polymer. Mischungen aus Polystyrol oder einem Polystyrolcopolymer mit mindestens einem weiteren Polymer werden auch als "Blends" bezeichnet. Als mindestens ein weiteres Polymer eignen sich alle dem Fachmann bekannten Polymere, wie beispielsweise die vorstehend beschriebenen Polymere.

Am meisten bevorzugt ist die dünnere thermoplastische Schaumstoffplatte (TS) ein Extrusionsschaumstoff aus einem extrudierten Polystyrol, der beispielsweise unter der Bezeichnung "Styrodur" von der BASF SE kommerziell erhältlich ist.

Sofern die dünnere thermoplastische Schaumstoffplatte (TS) ein Extrusionsschaumstoff ist, wird vorzugsweise an denjenigen Seiten (Oberflächen), die mit einer anderen Ausgangsplatte verbunden werden sollen, die Schäumhaut entfernt. Gegebenenfalls kann dies auch an den sonstigen Seiten (Oberflächen) der entsprechenden Ausgangsplatte durchgeführt werden. Das Entfernen der Schäumhaut (die auch als "Extrusionshaut" bezeichnet wird) als solches ist dem Fachmann bekannt. Dies bedeutet, dass die entsprechende Ausgangsplatte an den zu verbindenden Oberflächen, vorzugsweise an den thermisch zu verschweißenden Seiten (Oberflächen), schäumhautfrei ist.

Die dünneren thermoplastischen Schaumstoffplatten (TS) können prinzipiell beliebige Dichten aufweisen. Vorzugsweise beträgt die Dichte der dünneren thermoplastischen Schaumstoffplatten (TS) 10 bis 500 g/l, mehr bevorzugt 15 bis 200 g/l, insbesondere 20 bis 150 g/l.

Weiterhin ist es bevorzugt, dass die dünnere Schaumstoffplatte (TS) eine Wärmeleitfähigkeit λ ≤ 0,035 W/(mK), vorzugsweise ≤ 0,030 W/(mK) aufweist.

Die Wärmeleitfähigkeit der dünneren Schaumplatte (TS) wird vor Herstellung der zumindest zweilagigen Platte nach EN 12 667 oder EN 12 939 bei einer Mitteltemperatur von 10 +/- 0,3 °C bestimmt (nach Lagerung von 6 h bei 23 °C und 50 % Luftfeuchte).

Die im erfindungsgemäßen Verfahren eingesetzte mindestens eine dünnere duroplastische Schaumstoffplatte (DS) als solche ist dem Fachmann ebenfalls bekannt. Diese dünnere duroplastische Schaumstoffplatte (DS) weist (mindestens) an zwei sich gegenüberliegenden Seiten jeweils eine Metalldeckschicht auf. Bezüglich der Definition der Metalldeckschicht wird auf die entsprechenden Passagen im Text weiter unten verwiesen. Die dünnere duroplastische Schaumstoffplatte (DS) - ohne Berücksichtigung der jeweiligen Metalldeckschichten - kann jede beliebige dem Fachmann bekannte duroplastische Schaumstoffplatte sein. Vorzugsweise ist sie eine Polyurethanschaumstoffplatte, noch mehr bevorzugt eine Polyurethanhartschaumplatte.

Die dünneren duroplastischen Schaumstoffplatten (DS) können prinzipiell beliebige Dichten aufweisen. Vorzugsweise beträgt die Dichte der dünneren duroplastischen Schaumstoffplatte (DS) 10 bis 500 g/l, mehr bevorzugt 20 bis 200 g/l, insbesondere 30 bis 150 g/l.

Die dünnere duroplastische Schaumstoffplatte (DS) wird bevorzugt durch Umsetzung einer reaktiven Mischung enthaltend mindestens eine Komponente (K1) und mindestens eine Komponente (K2) erhalten, wobei die Komponente (K1) mindestens ein Isocyanat umfasst und die Komponente (K2) ausgewählt ist aus mindestens einem Polyetherpolyol, einem Polyesterpolyol oder einem Polyamin.

Als erste Komponente (K1) geeignete Isocyanate weisen bevorzugt einen Isocyanatindex im Bereich von 100 bis 400, besonders bevorzugt im Bereich von 100 bis 300, insbesondere bevorzugt im Bereich von 100 bis 200, auf.

Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden. Unter "mit Isocyanat reaktiven Gruppen" werden dabei alle in der reaktiven Mischung enthaltenen gegenüber Isocyanat reaktiven Gruppen, einschließlich gegebenenfalls chemischer Treibmittel und Verbindungen mit Epoxidgruppen, verstanden, nicht aber die Isocyanatgruppe selbst.

Als zweite Komponente (K2) wird bevorzugt mindestens eine Verbindung mit gegenüber Isocyanaten reaktiven Gruppen eingesetzt. Derartige Verbindungen sind dem Fachmann bekannt.

Als Verbindung mit gegenüber Isocyanaten reaktiven Gruppen können beispielsweise alle Verbindungen eingesetzt werden, die zumindest zwei gegenüber Isocyanaten reaktive Gruppen wie OH-, SH-, NH- und/oder CH-azide Gruppen aufweisen.

Bevorzugt als zweite Komponente (K2) ist eine Verbindung mit gegenüber Isocyanaten reaktiven Gruppen, die ausgewählt ist aus der Gruppe bestehend aus Polyetherpolyolen, Polyesterpolyolen und Polyaminen, wobei die mindestens eine Verbindung mit gegenüber Isocyanaten reaktiven Gruppen eine Funktionalität von 2 bis 8 aufweist, und wobei, wenn die zweite Komponente (K2) ausgewählt ist aus Polyetherpolyolen und Polyesterpolyolen, die mindestens eine Verbindung mit gegenüber Isocyanaten reaktiven Gruppen eine mittlere Hydroxylzahl von 12 bis 1200 mg KOH/g aufweist.

Polyetherpolyole als solche sind dem Fachmann bekannt und können nach bekannten Verfahren hergestellt werden, beispielsweise durch anionische Polymerisation von Alkylenoxiden unter Zusatz mindestens eines Startermoleküls, das vorzugsweise 2 bis 6 reaktive Wasserstoffatome gebunden enthält, in Gegenwart von Katalysatoren. Als Katalysatoren können Alkalihydroxide wie beispielsweise Natrium- oder Kaliumhydroxid oder Alkalialkoholate wie Natriummethylat, Natrium- oder Kaliumethylat oder Kaliumisopropylat eingesetzt werden. Bei kationischer Polymerisation werden als Katalysatoren beispielsweise Lewis-Säuren wie Ammoniumpentachlorid, Bortrifluridetherat oder Bleicherde eingesetzt. Weiter können als Katalysatoren auch Doppelmetallcyanidverbindungen, sogenannte DMC-Katalysatoren, sowie aminbasierte Katalysatoren eingesetzt werden.

Vorzugsweise werden als Alkylenoxide eine oder mehrere Verbindungen mit zwei bis vier Kohlenstoffatomen im Alkylenrest wie beispielsweise Ethylenoxid, Tetrahydrofuran, 1,2-Propylenoxid, 1,3-Propylenoxid, 1,2-Butylenoxid, 2,3-Butylenoxid sowie Mischungen daraus, eingesetzt. Bevorzugt werden Ethylenoxid und/oder 1,2-Propylenoxid eingesetzt.

Als Startermoleküle kommen beispielsweise Ethylenglycol, Diethylenglycol, Propylenglycol, Dipropylenglycol, Glyzerin, Trimethylolpropan, Pentaerythrit, Zuckerderivate wie Saccharose, Hexitderivate wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3-Propandiamin, 1,6-Hexandiamin, Ethanolamin, Diethanolamin, Triethanolamin sowie andere dem Fachmann bekannte zwei- oder mehrwertige Alkohole oder ein- oder mehrwertige Amine in Betracht.

Als Polyesterpolyole eignen sich alle dem Fachmann bekannten Polyesterpolyole. Beispielsweise können geeignete Polyesterpolyole durch Kondensation von mehrfunktionellen Alkoholen mit zwei bis zwölf Kohlenstoffen wie Ethylenglycol, Diethylenglycol, Butandiol, Trimethylolpropan, Glyzerin oder Pentaerythrit, mit mehrfunktionellen Carbonsäuren mit zwei bis zwölf Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure, den Isomeren von Naphthalindicarbonsäuren, den Anhydriden der genannten Säuren sowie Mischungen daraus, hergestellt werden. Bevorzugt werden aromatische Disäuren wie Phthalsäure, Isophthalsäure und/oder Terephthalsäure sowie deren Anhydride als Säurekomponente und Ethylenglycol, Diethylenglycol, 1,4-Butandiol und/oder Glyzerin als Alkoholkomponente eingesetzt.

Darüber hinaus können zur Herstellung der Polyesterpolyole anstatt der mehrfunktionellen Carbonsäuren auch entsprechende monomere Ester wie zum Beispiel Dimethylterephthalat oder polymere Ester wie zum Beispiel Polyethylenterephthalat eingesetzt werden.

Als Polyamine eignen sich alle dem Fachmann bekannten Polyamine. Geeignete Polyamine sind sowohl aliphatische Polyamine als auch aromatische Polyamine. Bevorzugt sind aliphatische Polyamine, die im Rahmen der vorliegenden Erfindung auch als "Polyalkylenpolyamine" bezeichnet werden.

Unter dem Begriff "Polyalkylenpolyamin" werden im Rahmen der vorliegenden Erfindung aliphatische Amine verstanden, die mindestens drei Aminogruppen (primär, sekundär oder tertiär) enthalten.

Als Polyalkylenpolyamine sind Polyethylenimine besonders bevorzugt. Unter "Polyethyleniminen" werden im Rahmen der vorliegenden Erfindung sowohl Oligomere als auch Homo- und Copolymere verstanden, welche die Gruppierungen -H₂-CH₂-NH-aufweisen und mindestens drei Aminogruppen enthalten.

Die erste Komponente (K1) und die zweite Komponente (K2) können miteinander reagieren. Diese Reaktionen sind dem Fachmann als solche bekannt.

Bei der Reaktion der ersten Komponente (K1) mit der zweiten Komponente (K2) bilden sich beispielsweise Polyurethane, Polyisocyanurate oder Polyharnstoffe, bevorzugt bilden sich Polyisocyanate oder Polyurethane, am meisten bevorzugt bilden sich Polyurethane. Dem Fachmann sind diese Reaktionen bekannt.

Beispielsweise bilden sich Polyurethane, wenn als erste Komponente (K1) Isocyanate eingesetzt werden und als zweite Komponente (K2) Polyetherpolyole. Polyisocyanurate bilden sich bei dem Einsatz von Isocyanaten als erste Komponente (K1) und Polyesterpolyolen als zweite Komponente (K2). Polyharnstoffe werden erhalten durch die Reaktion von Isocyanaten als erste Komponente (K1) und Polyaminen als zweite Komponente (K2).

Darüber hinaus können in der reaktiven Mischung, die zur Herstellung einer duroplastischen Schaumstoffplatte eingesetzt wird, weitere dem Fachmann bekannte Vernetzer enthalten sein.

Weiterhin ist es bevorzugt, dass die dünnere duroplastische Schaumstoffplatte (DS) eine duroplastische Polyurethanschaumstoffplatte ist, die erhalten wird durch Umsetzung einer reaktiven Mischung enthaltend als Komponente (K1) mindestens ein Isocyanat, ausgewählt aus Toluoldiisocynat (TDI), Diphenylmethandiisocyanat (MDI), polymeren Diphenylmethandiisocyanaten (PMDI) und Mischungen daraus, und als Komponente (K2) mindestens ein Polyetherpolyol und/oder mindestens ein Polyesterpolyol.

In einer weiteren bevorzugten Ausführungsform ist die dünnere duroplastische Schaumstoffplatte (DS) eine Phenolharzschaumstoffplatte. Phenolharzschaumstoffplatten als solche sind dem Fachmann bekannt. Das Phenolharz wird vorzugsweise durch Polykondensation von Phenolen und Aldehyden erhalten, insbesondere durch Polykondensation von Phenol und/oder Resorcin und Formaldehyd. Der Phenolharzschaumstoff wird bevorzugt durch Zugabe eines Treibmittels und eines Härters zu dem Phenolharz mit oder ohne Zufuhr von äußerer Wärme erhalten.

Vorzugsweise enthält die dünnere duroplastische Schaumstoffplatte (DS) mindestens ein Treibmittel. Treibmittel als solche sind dem Fachmann bekannt. Das Treibmittel wird in der Regel beim Herstellungsprozess der entsprechenden Ausgangsplatte eingesetzt, so dass es sich insbesondere in den Poren der entsprechenden Ausgangsplatte befindet. Das Treibmittel kann dabei sowohl in einer dünneren thermoplastischen Schaumstoffplatte als auch in einer dünneren duroplastischen Schaumstoffplatte enthalten sein. Insbesondere werden Treibmittel bei der Herstellung von Ausgangsplatten im Rahmen des Extrusionsprozesses eingesetzt.

Bei den Treibmitteln kann es sich beispielsweise um physikalische und/oder chemische Treibmittel handeln. Unter chemischen Treibmitteln versteht man Verbindungen, die bei der Herstellung der Ausgangsplatte mit dem entsprechenden Edukten, beispielsweise einem Isocyanat, bei den entsprechenden Reaktionstemperaturen gasförmige Produkte bilden. Ein Beispiel für ein chemisches Treibmittel ist Wasser oder Ameisensäure. Unter physikalischen Treibmitteln versteht man Verbindungen, die in den entsprechenden Ausgangsplatten gelöst oder emulgiert sind und die gegebenenfalls verdampfen können.

Beispiele für im Rahmen des erfindungsgemäßen Verfahrens einsetzbaren Treibmittel sind Kohlenwasserstoffe, halogenierte Kohlenwasserstoffe und andere Verbindungen wie zum Beispiel perfluorierte Alkane wie Perfluorhexan, Fluorchlorkohlenwasserstoffe und Etheresterketone, Acetale sowie anorganische und organische Verbindungen, die beim Erhitzen Stickstoff freisetzen oder Mischungen daraus, beispielsweise (cyclo)aliphatische Kohlenwasserstoffe mit vier bis acht Kohlenstoffatomen oder Fluorkohlenwasserstoffe wie 1,1,1,3,3-Pentafluorporopan (HFC 245 fa), Trifluormethan, Difluormethan, 1,1,1,3,3-Pentafluorbutan (HFC 365 mfc), 1,1,1,2-Tetrafluorethan, Difluorethan und Heptafluorpropan.

Weiterhin können alle dem Fachmann bekannten halogenierten, bevorzugt fluorierten, Alkene als Treibmittel eingesetzt werden. Bevorzugt sind dabei C2- bis C6-Fluoralkene, besonders bevorzugt C3- bis C5-Fluoralkene. Weitere Beispiele geeigneter fluorierter Alkene sind Propene, Butene, Pentene und Hexene mit drei bis sechs Fluorsubstituenten, wobei andere Substituenten wie Chlor vorhanden sein können, beispielsweise Tetrafluorpropene, Fluorchlorpropene, beispielsweise Trifluormonochlorpropene, Pentafluorpropene, Fluorchlorbutene, Hexafluorbutene oder Mischungen davon.

Beispiele dafür sind: fluorierte Alkene ausgewählt aus der Gruppe bestehend aus cis-oder trans-1,1,1,3-Tetrafluorpropen, 1,1,1-Trifluor-2-chlorpropen, 1-Chlor-3,3,3-trifluorpropen, 1,1,1,2,3-Pentafluorpropen, in cis-oder trans-Form, 1,1,1,4,4,4-Hexafluorbuten, 1-Brompentafluorpropen, 2-Brompentafluorpropen, 3-Brompentafluorpropen, 1,1,2,3,3,4,4-Heptafluor-1-buten, 3,3,4,4,5,5,5-Heptafluor-1-penten, 1-Brom-2,3,3,3-tetrafluorpropen, 2-Brom-1,3,3,3-tetrafluorpropen, 3-Brom-1,1,3,3-tetrafluorpropen, 2-Brom-3,3,3-trifluorpropen, E-1-Brom-3,3,3-trifluorpropen, 3,3,3-Trifluor-2-(trifluormethyl)propen, 1-Chlor-3,3,3-trifluorpropen, 2-Chlor-3,3,3-trifluorpropen, 1,1,1-Trifluor-2-buten und Mischungen davon.

Vorzugsweise ist das Treibmittel ein aliphatischer Kohlenwasserstoff oder ein halogenierter Kohlenwasserstoff, insbesondere ist das Treibmittel ausgewählt aus n-Pentan, iso-Pentan, Cyclopentan, einem fluorhaltigen Kohlenwasserstoff, einem chlorhaltigen Kohlenwasserstoff oder einem halogenierten Alken. Weiterhin ist es bevorzugt, dass das Treibmittel auch Wasser enthalten kann.

Weiterhin ist es bevorzugt, dass die dünnere duroplastische Schaumstoffplatte (DS) eine Wärmeleitfähigkeit λ ≤ 0,030 W/(mK), vorzugsweise ≤ 0,025 W/(mK), insbesondere ≤ 0,020 W/(mK), aufweist.

Die Wärmeleitfähigkeit der dünneren duroplastischen Schaumstoffplatte (DS) wird vor Herstellung der zumindest zweilagigen Platten nach EN 12 667 oder EN 12 939 bei einer Mitteltemperatur von 10 +/- 0,3 °C bestimmt (nach Lagerung von 6 h bei 23 °C und 50 % Luftfeuchte).

Die dünnere duroplastische Schaumstoffplatte (DS) weist an zwei sich gegenüberliegenden Seiten jeweils eine Metalldeckschicht auf. Metalldeckschichten als solche sind dem Fachmann bekannt. Als Metall können hierfür prinzipiell alle dem Fachmann bekannten Metalle eingesetzt werden, vorzugsweise wird Aluminium als Metall verwendet, insbesondere in Form von Aluminiumfolien. Gegebenenfalls können auch unterschiedliche Metalle oder Gemische bzw. Legierungen als Metalldeckschicht im Rahmen der vorliegenden Erfindung auf die dünnere duroplastische Schaumstoffplatte (DS) aufgebracht werden. Das Aufbringen der Metalldeckschicht kann durch thermisches Verschweißen oder durch Verkleben erfolgen. Voraussetzung ist dabei aber, dass mindestens zwei sich gegenüberliegende Seiten der dünneren duroplastischen Schaumstoffplatte (DS) eine solche Metalldeckschicht aufweisen. Gegebenenfalls können auch sämtliche (sechs) Seiten der dünneren duroplastischen Schaumstoffplatte (DS) mit einer Metalldeckschicht versehen werden.

Vorzugsweise enthält mindestens eine der Metalldeckschichten der dünneren duroplastischen Schaumstoffplatte (DS) Aluminium, wobei
i) die dünnere duroplastische Schaumstoffplatte (DS) vorzugsweise genau zwei Metalldeckschichten aufweist, die beide vollständig aus Aluminium hergestellt sind, und/oder
ii) die genau zwei Metalldeckschichten vorzugsweise jeweils auf den beiden flächenmäßig größten und sich gegenüberliegenden Seiten der dünneren duroplastischen Schaumstoffplatten (DS) aufgebracht sind, und/oder
iii) mindestens eine, mehr bevorzugt jede der Seiten der dünneren duroplastischen Schaumstoffplatte (DS), die keine Metalldeckschicht aufweisen, vorzugsweise mit einer Schutzschicht versehen ist, insbesondere einer Epoxidharzschutzschicht.

Die dünnere duroplastische Schaumstoffplatte (DS) ist vorzugsweise aus einem geschlossenzelligen Material hergestellt.

Unter "geschlossenen Zellen" werden im Rahmen der vorliegenden Erfindung Zellen verstanden, deren Hohlräume nicht durch Öffnungen in den Wänden der jeweiligen Zellen miteinander verbunden sind.

Ein "geschlossenzelliges Material" enthält mehr als 50 % geschlossene Zellen (bezogen auf die Gesamtzahl der Zellen in dem geschlossenzelligen Material). Demzufolge können auch offene Zellen in dem geschlossenzelligen Material enthalten sein. "Offene Zellen" sind Zellen, deren Hohlräume durch Öffnungen in den Wänden der jeweiligen Zellen miteinander verbunden sind. Im Rahmen der vorliegenden Erfindung enthält ein geschlossenzelliges Material immer mehr geschlossene Zellen als offene Zellen (bezogen auf die Gesamtzahl der Zellen).

Vorzugsweise enthält das geschlossenzellige Material mindestens 80 %, bevorzugt mindestens 90 %, mehr bevorzugt mindestens 95 %, geschlossene Zellen, bezogen auf die Gesamtzahl der Zellen in dem geschlossenzelligen Material.

Offen- beziehungsweise geschlossenzellige Materialen als solche, sowie deren Herstellungsverfahren sind dem Fachmann bekannt, sie können beispielsweise über Schäumprozesse hergestellt werden. Dabei wird üblicherweise in einem ersten Schritt Gas in geeignete Flüssigkeiten, vorzugsweise in aufgeschmolzene Polymere oder Polymervorstufen, eingeblasen, oder man erreicht die Schaumbildung durch heftiges Schlagen, Schütteln, Verspritzen oder Rühren der Flüssigkeit in einer Gasatmosphäre. Danach erfolgt üblicherweise in einem zweiten Schritt die Aushärtung der Flüssigkeit unter Erhalt eines offen- beziehungsweise geschlossenzelligen Materials. Ob ein (überwiegend) offen- oder ein geschlossenzelliges Material resultiert, hängt unter anderem vom Flüssigkeitsvolumen, den mechanischen Bedingungen, dem Druck und der Temperatur ab.

Der prozentuale Anteil der offenen beziehungsweise geschlossenen Zellen, bezogen auf die Gesamtzahl der Zellen in dem offenzelligen Material, kann mittels Gaspyknometrie nach DIN ISO 4590 (2003) bestimmt werden. Dazu wird zuerst ein geometrischer Körper (Quader, Würfel oder auch Zylinder), das Probenstück, geschnitten und beispielsweise mit Hilfe genauer Ausmessung mittels Mikrometerschraube dessen exaktes geometrisches Volumen bestimmt. Danach wird das Probenstück mit einem Gaspyknometer bei einem geringen Druck von 0,25 bar vermessen. Als Messgas wird Stickstoff verwendet. Mit dieser Messung wird das Volumen des Probenkörpers erhalten, in den sich das Messgas nicht ausbreiten kann, also das geschlossene Volumen zur Bestimmung des Anteils der geschlossenen Zellen. Der Quotient aus geschlossenem zu geometrischem Volumen multipliziert mit 100 % ergibt den prozentualen Anteil der geschlossenen Zellen in dem Probenstück. Die dünnere duroplastische Schaumstoffplatte (DS) weist vorzugsweise eine Druckfestigkeit von mindestens 0,1 N/mm², mehr bevorzugt von mindestens 0,2 N/mm² und insbesondere bevorzugt von mindestens 0,3 N/mm², auf.

Im Rahmen der vorliegenden Erfindung wird das Verbinden der dünneren Ausgangsplatten (TS) und (DS) durch Verkleben durchgeführt, wobei der Klebstoff, mit dem die dünnere thermoplastische Schaumstoffplatte (TS) und die dünnere duroplastische Schaumstoffplatte (DS) miteinander verklebt werden, mindestens eine anorganische Komponente enthält. Es ist grundsätzlich erforderlich, dass die dünnere thermoplastische Schaumstoffplatte (TS) und die dünnere duroplastische Schaumstoffplatte (DS) so miteinander verklebt werden, dass sich in der zumindest zweilagigen Schaumstoffplatte eine Metalldeckschicht zwischen der dünneren thermoplastischen Schaumstoffplatte (TS) und der dünneren duroplastischen Schaumstoffplatte (DS) befindet.

Der im erfindungsgemäßen Verfahren eingesetzte Klebstoff, der mindestens eine anorganische Komponente enthält, ist dem Fachmann bekannt.

Der erfindungsgemäße Klebstoff enthält mindestens 30 Gew.-%, bevorzugt mindestens 40 Gew.-%, besonders bevorzugt mindestens 50 Gew.-% und insbesondere bevorzugt mindestens 60 Gew.-%, bezogen auf das Gesamtgewicht des Klebstoffs, mindestens einer anorganischen Komponente.

Weiterhin enthält er vorzugsweise höchstens 85 Gew.-%, mehr bevorzugt höchstens 80 Gew.-%, besonders bevorzugt höchstens 75 Gew.-% und insbesondere bevorzugt höchstens 70 Gew.-%, bezogen auf das Gesamtgewicht des Klebstoffs, mindestens einer anorganischen Komponente.

Im Rahmen der vorliegenden Erfindung ist die anorganische Komponente vorzugsweise ausgewählt aus der Gruppe bestehend aus Kalziumoxid, Siliciumoxid, Titanoxid, Aluminiumoxid, Eisenoxid, Magnesiumoxid, Kaliumoxid, Natriumoxid und Kalziumhydroxid, mehr bevorzugt aus der Gruppe bestehend aus Kalziumoxid, Siliciumoxid und Aluminiumoxid.

Der erfindungsgemäße Klebstoff enthält mindestens 30 Gew.-%, bevorzugt mindestens 40 Gew.-%, mehr bevorzugt mindestens 50 Gew.-%, bezogen auf das Gesamtgewicht des Klebstoffs, Kalziumoxid, Siliciumoxid und/oder Aluminiumoxid.

Die im Klebstoff enthaltene mindestens eine anorganische Komponente ist vorzugsweise mit Wasser gemischt.

Der Klebstoff enthält mindestens 15 Gew.-%, bevorzugt mindestens 20 Gew.-%, mehr bevorzugt mindestens 25 Gew.-%, besonders bevorzugt mindestens 30 Gew.-%, bezogen auf das Gesamtgewicht des Klebstoffs, Wasser.

Weiterhin enthält er vorzugsweise höchstens 70 Gew.-%, mehr bevorzugt höchstens 60 Gew.-%, besonders bevorzugt höchstens 50 Gew.-% und insbesondere bevorzugt höchstens 40 Gew.-%, bezogen auf das Gesamtgewicht des Klebstoffs, Wasser.

In einer weiteren bevorzugten Ausführungsform enthält der Klebstoff mindestens 60 Gew.-%, bevorzugt mindestens 75 Gew.-%, mehr bevorzugt mindestens 90 Gew.-%, besonders bevorzugt mindestens 95 Gew.-%, bezogen auf das Gesamtgewicht des Klebstoffs, mindestens einer anorganischen Komponente und Wasser.

Der Klebstoff kann gegebenenfalls neben der mindestens einen anorganischen Komponente und Wasser noch weitere Komponenten/Materialien enthalten, die selbst keine anorganischen Komponenten oder Wasser sind, beispielsweise organische Klebstoffe.

Der Klebstoff enthält vorzugsweise höchstens 10 Gew.-%, mehr bevorzugt höchstens 5 Gew.-% und besonders bevorzugt höchstens 1 Gew.-%, bezogen auf das Gesamtgewicht des Klebstoffs, eines organischen Klebstoffs.

In einer besonders bevorzugten Ausführungsform enthält der Klebstoff keinen organischen Klebstoff, insbesondere enthält der Klebstoff keinen PolyurethanKlebstoff.

Der Klebstoff wird im erfindungsgemäßen Verfahren auf mindestens einer Oberfläche der dünneren thermoplastischen Schaumstoffplatte (TS) und/oder auf mindestens einer Metalldeckschicht der dünneren duroplastischen Schaumstoffplatte (DS) aufgebracht, wobei der Klebstoff mindestens eine anorganische Komponente gemäß den vorstehenden Definitionen enthält.

Vorzugsweise wird der Klebstoff pro zu verklebendem Plattenpaar auf nur eine zu verklebende Oberfläche der dünneren Ausgangsplatten aufgetragen. Verfahren zum Auftragen eines Klebstoffs sind dem Fachmann bekannt, beispielsweise kann der Klebstoff großflächig auf die entsprechende Oberfläche der dünneren thermoplastischen Schaumstoffplatte (TS) und/oder auf die Metalldeckschicht der dünneren duroplastischen Schaumstoffplatte (DS) aufgetragen werden. Das Auftragen des Klebstoffs kann nach den üblichen Verfahren erfolgen, zum Beispiel durch Pinseln, Sprühen, Walzen, Rakeln oder Drucken. Die aufgebrachte Klebstoffmenge liegt in der Regel zwischen 10 g/m² bis 400 g/m² (fest), bevorzugt sind 20 g/m² bis 250 g/m². Besonders bevorzugt wird der Klebstoff in Mengen von < 400 g/m², vorzugsweise von < 250 g/m² (bezogen auf die zu verklebende Oberfläche einer Platte pro Plattenpaar), aufgetragen. Die Mindestmengen betragen dabei vorzugsweise 10 g/m², insbesondere 20 g/m². Vorzugsweise werden die vorgenannten Klebstoffmengen nur auf eine zu verklebende Oberfläche der dünneren Ausgangsplatten (pro Plattenpaar) aufgebracht, während auf die zweite zu verklebende Oberfläche kein Klebstoff aufgebracht wird. Im Rahmen der vorliegenden Erfindung werden vorzugsweise außer den vorstehend aufgeführten Klebstoffen keine weiteren Klebstoffe verwendet.

Das Aufbringen des Klebstoffs erfolgt vorzugsweise gleichförmig in eine Richtung der jeweiligen Plattenoberfläche. Dieser Ausführungsform wird auch als Auftrag (des Klebstoffs) unter Vorspannung bezeichnet.

In einer weiteren bevorzugten Ausführungsform der vorliegenden Erfindung wird der Klebstoff strukturiert, vorzugsweise punktförmig, linienförmig oder gitterförmig, insbesondere gitterförmig, auf mindestens eine Oberfläche der dünneren thermoplastischen Schaumstoffplatte (TS) und/oder auf mindestens eine Metalldeckschicht der dünneren duroplastischen Schaumstoffplatte (DS) aufgetragen.

Diese Ausführungsform der vorliegenden Erfindung, die auch als strukturiertes Verkleben bezeichnet wird, wird nachfolgend näher erläutert. Das strukturierte Verkleben mit dem Klebstoff kann durch beliebige Strukturen beziehungsweise Strukturformen erfolgen. Vorzugsweise sind auf der Oberfläche der dünneren Ausgangsplatte, auf die der Klebstoff strukturiert aufgebracht ist, 20 bis 80 %, mehr bevorzugt 40 bis 80 %, insbesondere 50 bis 75 %, der jeweiligen Plattenoberfläche mit Klebstoff versehen.

Die Strukturen können im Rahmen der vorliegenden Erfindung auch als Muster oder Strukturierungsmuster bezeichnet werden. Eine Struktur ist aus mindestens einer Strukturform, die auch als Struktureinheit bezeichnet werden kann, aufgebaut. Unter einer Struktureinheit (Strukturform) wird im Rahmen der vorliegenden Erfindung die kleinste Einheit in einem Muster (Struktur) verstanden. Eine solche Struktureinheit kann beispielsweise ein Karo, eine Raute, ein Rechteck, ein Kreuz, ein Quadrat oder eine Linie sein. Gegebenenfalls können solche Struktureinheiten sich abwechseln beziehungsweise miteinander kombiniert werden. So sind Muster denkbar, die aus mehreren verschiedenen Struktureinheiten aufgebaut sind, beispielsweise aus mehreren Linien von unterschiedlicher Stärke (Breite) und/oder Tiefe, die sich beispielsweise mit Rauten oder Quadraten abwechseln. So können auch in einem Gitter unterschiedliche Struktureinheiten enthalten sein, beispielsweise Quadrate von unterschiedlicher Größe, die abwechselnd angeordnet sind. Solche Strukturen werden auch als Raster bezeichnet. Ein Raster kann beispielsweise auch aus mehreren Kreuzen gebildet werden. Eine solche Struktur stellt im Rahmen der vorliegenden Erfindung eine Ausführungsform eines Gitters dar.

Die Abstände zwischen den einzelnen Struktureinheiten auf der jeweiligen Oberfläche der dünneren thermoplastischen Schaumstoffplatte (TS) und/oder der Metalldeckschicht der dünneren duroplastischen Schaumstoffplatte (DS), die durch das Auftragen des Klebstoffs so erzeugt wurden, können beliebige Werte (Größen) annehmen. Vorzugsweise beträgt der Abstand zwischen den einzelnen Struktureinheiten des strukturiert aufgebrachten Klebstoffs 5 bis 50 mm (Durchschnittswert über das gesamte Muster), insbesondere beträgt der Abstand 7,5 bis 20 mm. Die Breite einer Struktureinheit (Struktur), beispielsweise der Durchmesser eines Punktes (bei einer punktförmigen Struktur) oder die Breite einer Linie (bei einer linien- oder gitterförmigen Struktur) kann beliebig sein, vorzugsweise ist sie im Bereich von 1 bis 100 mm, mehr bevorzugt 5 bis 50 mm, insbesondere 10 bis 25 mm.

Sofern bei dieser Ausführungsform der vorliegenden Erfindung der Klebstoff pro Plattenpaar auf beide miteinander zu verklebenden Oberflächen der dünneren Ausgangsplatten aufgebracht werden soll, ist es bevorzugt, dass die beiden zu verklebenden Oberflächen identische oder zu mindestens 80 % übereinstimmende Strukturierungsmuster (Muster oder Struktur) aufweisen. Vorzugsweise weisen die beiden zu verklebenden Oberflächen identische Strukturierungsmuster auf. Weiterhin ist es bevorzugt, dass die zu verklebenden Oberflächen vor dem Verkleben so übereinandergelegt werden, dass möglichst viele der mit dem Klebstoff erzeugten Strukturen auf beiden zu verklebenden Oberflächen miteinander zur Deckung kommen. Besonders bevorzugt werden bei dieser Ausgestaltung dieser Ausführungsform zwei Oberflächen mit identischen Strukturierungsmuster miteinander verklebt, wobei die zu verklebenden Oberflächen vor dem Verkleben so übereinandergelegt werden, dass die mit dem Klebstoff erzeugten Strukturen auf beiden zu verklebenden Oberflächen vollständig miteinander zur Deckung kommen.

Ein weiterer Gegenstand der vorliegenden Erfindung ist eine zumindest zweilagige Schaumstoffplatte, erhältlich nach dem vorstehend beschriebenen Verfahren.

Ein weiterer Gegenstand der vorliegenden Erfindung ist die Verwendung einer solchen zumindest zweilagigen Schaumstoffplatte als Dämmmaterial für die Außenwand eines Bauwerks.

Ein weiterer Gegenstand der vorliegenden Erfindung ist die Außenwand eines Bauwerks, auf die eine erfindungsgemäße zumindest zweilagige Platte aufgebracht ist, vorzugsweise ist die erfindungsgemäße zumindest zweilagige Platte so auf die Außenwand aufgebracht, dass eine flächenmäßig größte Seite (xy-Ebene) einer dünneren thermoplastischen Ausgangsplatte (TS) mit der Außenwand des Bauwerks verbunden ist.

Nachfolgend wird die vorliegende Erfindung anhand von Beispielen näher erläutert.

### Beispiele

In den nachfolgenden Beispielen werden die zumindest zweilagigen Schaumstoffplatten durch Verkleben hergestellt. Die verwendeten Klebstoffe und deren genaue Zusammensetzung sind in Tabelle 1 aufgeführt.

Die zu verklebenden Ausgangsplatten, also mindestens eine dünnere thermoplastische Schaumstoffplatte (TS) und mindestens eine dünnere duroplastische Schaumstoffplatte (DS), die an den jeweils beiden flächenmäßig größten und sich gegenüberliegenden Seiten eine Aluminiumdeckschicht aufweist, haben jeweils die folgenden Dimensionen:

| | |
|---|---|
| Länge (x-Richtung): | 1.000 mm |
| Breite (y-Richtung): | 500 mm |
| Dicke (z-Richtung): | Die jeweiligen Werte sind in den nachfolgenden Tabellen 1, 2 und 3 für die einzelnen Beispiele angegeben. |

Die Dicke der beiden Aluminiumdeckschichten auf der kaschierten duroplastischen Schaumstoffplatte (DS) beträgt jeweils 0,05 mm. Die Dickewerte der Aluminiumdeckschicht sind in den entsprechenden Dickeangaben für die jeweilige Dicke der dünneren duroplastischen Schaumstoffplatte (DS) gemäß den Tabellen 1, 2 und 3 bereits mitberücksichtigt. Die Abmessung der Aluminiumdeckschicht in x-Richtung sowie in y-Richtung entspricht exakt den entsprechenden Abmessungen der zu verklebenden dünneren Schaumstoffplatten (DS) und (TS).

Das Verkleben wird so durchgeführt, dass erfindungsgemäß in der zumindest zweilagigen Schaumstoffplatte eine der beiden Aluminiumdeckschichten (Metalldeckschichten) der dünneren duroplastischen Schaumstoffplatte (DS) sich nach dem Klebevorgang zwischen jeweils einer flächenmäßig gleichgroßen Seite befindet, die von der dünneren thermoplastischen Schaumstoffplatte (TS) bzw. von der dünneren duroplastischen Schaumstoffplatte (DS) stammt. Die jeweiligen Seiten der entsprechenden Ausgangsplatten haben genau die gleichen Dimensionen, es handelt sich somit um eine der beiden flächenmäßig größten Seiten der jeweiligen Ausgangsplatten, die durch die x-Richtung und die y-Richtung definiert werden. Soweit nicht anders angegeben, sind in den nachfolgenden Beispielen die dünneren duroplastischen Schaumstoffplatten (DS) nur an den beiden flächenmäßig größten Seiten mit Aluminiumdeckplatten kaschiert (also diejenigen Seiten, die durch die x- und y-Richtung festgelegt werden).

Der zum Verkleben verwendete Klebstoff wird jeweils mittels eines Spachtels oder eines Pinsels auf eine aluminiumkaschierte Seite einer dünneren duroplastischen Schaumstoffplatte (DS) aufgetragen. Die Menge des Klebstoffs beträgt dabei 200 g/m³. Danach wird auf der mit Klebstoff versehenen Seite der dünneren duroplastischen Schaumstoffplatte (DS) eine dünnere thermoplastische Schaumstoffplatte (TS) aufgelegt. Die zu verklebenden dünneren Schaumstoffplatten (DS) und (TS) werden anschließend in einer Presse mit einem Druck von 0,1 bar (0,01 N/mm²) verpresst.

Bei den in Tabelle 1 aufgeführten Beispielen 1 bis 5 und A bis C wird der vorgenannte Klebevorgang einfach durchgeführt, wobei dadurch eine genau zweilagige Schaumstoffplatte erhalten wird. Im Gegensatz dazu wird bei den in Tabelle 2 aufgeführten Beispielen 6 bis 12 und D bis F der vorgenannte Klebevorgang zweimal durchgeführt, wobei dadurch eine genau dreilagige Schaumstoffplatte erhalten wird. In anderen Worten ausgedrückt, wird bei den in Tabelle 2 aufgeführten Beispielen eine zweite dünnere thermoplastische Schaumstoffplatte (TS) auf die nach dem ersten Verklebevorgang erhaltene zumindest zweilagige Schaumstoffplatte aufgeklebt. Der zweite Klebevorgang wird dabei so durchgeführt, dass sich wiederum eine Aluminiumdeckschicht zwischen einer von einer dünneren thermoplastischen Ausgangsplatte (TS) und einer von einer dünneren duroplastischen Ausgangsplatte (DS) stammenden Seite befindet.

### Herstellung der zweilagigen Platten (siehe Tabelle 1)

Es werden folgende dünnere Ausgangsplatten eingesetzt:
a) thermoplastische Schaumstoffplatten (TS) und
b) alukaschierte duroplastische Schaumstoffplatten (DS)

Als thermoplastische Schaumstoffplatten (TS) werden handelsübliche Styropor-Platten aus dem Baumarkt (Dicke: 50 oder 100 mm, λ = 31 W/(mK)) eingesetzt.

Als alukaschierte duroplastische Schaumstoffplatten (DS) werden kaschierte duroplastische Polyurethanplatten (PU mit Alu) der Firma Bachl (PUR/PIR Dämmplatten Alu 024, Dicke: 60 oder 120 mm, λ = 23 W/(mK)) eingesetzt. Diese wurden unter Verwendung von Cyclopentan als Treibmittel hergestellt.

Bei den Beispielen 1 bis 5 handelt es sich um erfindungsgemäße Beispiele, bei den Beispielen A bis C handelt es sich um Vergleichsbeispiele.

In der Spalte mit der Zusammensetzung des Klebstoffs sind in Klammer auch die Gewichtsprozente der einzelnen Komponenten, bezogen auf das Gesamtgewicht des Klebstoffs, angegeben.

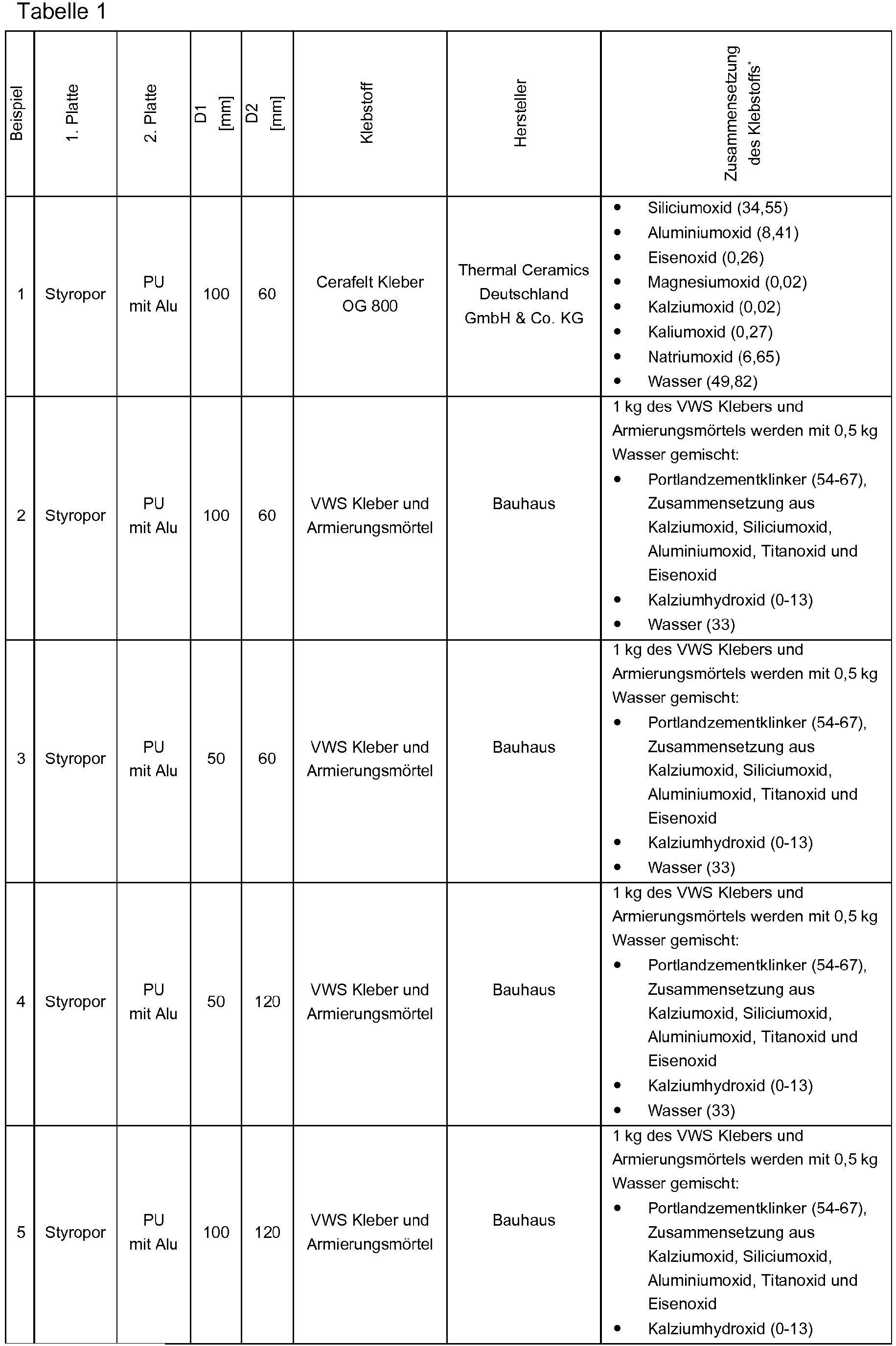

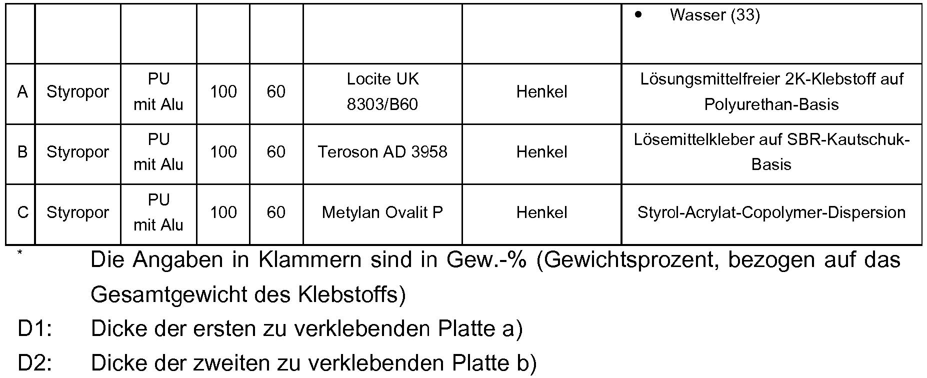

### Herstellung der dreilagigen Platten (siehe Tabelle 2)

Durch zweifaches Ausführen des Klebevorgangs gemäß Tabelle 1 werden folgende Kombinationen von dreilagigen Platten hergestellt.

Bei den Beispielen 8 bis 14 handelt es sich um erfindungsgemäße Beispiele, bei den Beispielen D bis F handelt es sich um Vergleichsbeispiele.

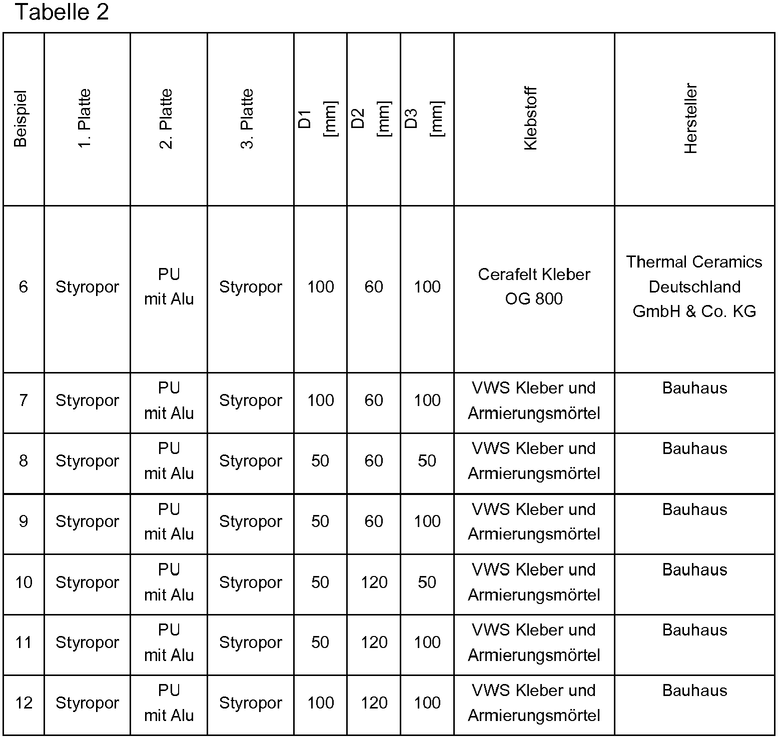

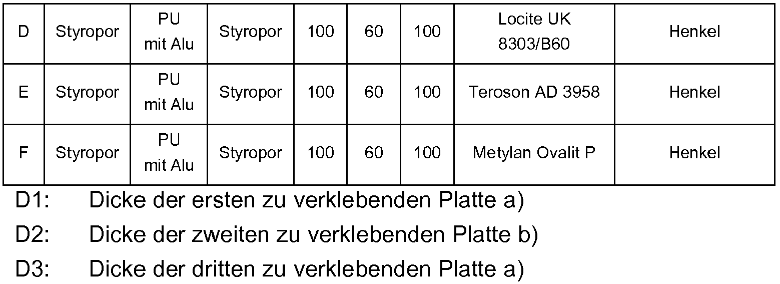

### Zugfestigkeit und Brandprüfung (siehe Tabelle 3)

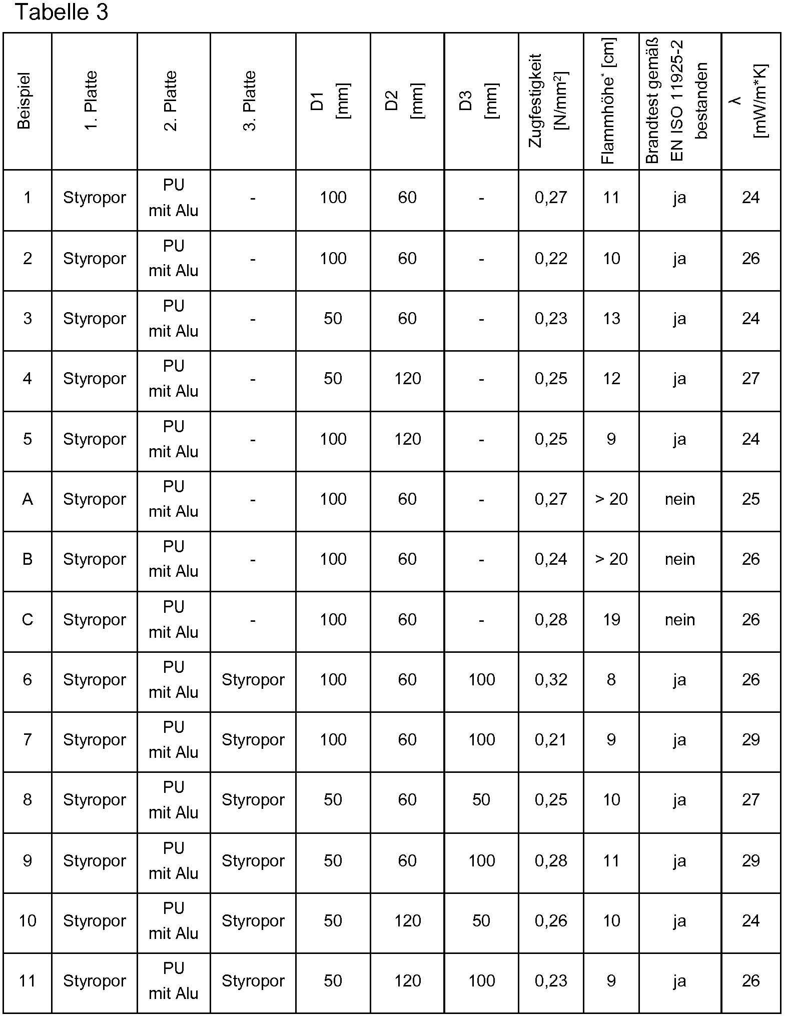

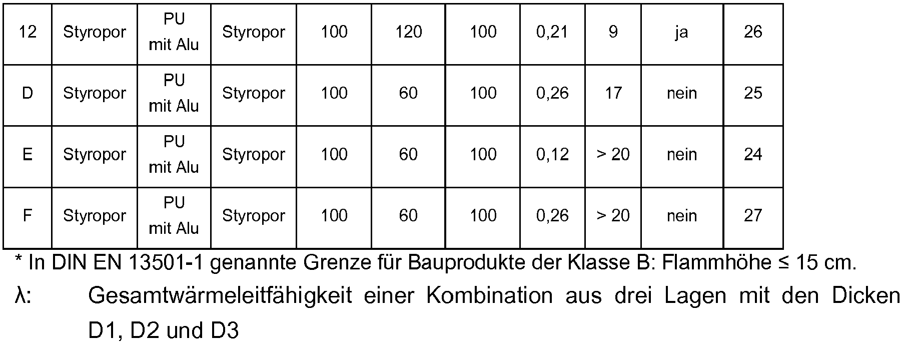

Die erfindungsgemäßen Platten 1 bis 12 weisen alle eine hohe Zugfestigkeit von > 0,15 N/mm² sowie eine geringe Wärmeleitfähigkeit von < 0,030 W/(mK) auf.

Die Platten 1 bis 12 sowie A bis F werden in einem Brandtest geprüft. Bei dem Brandtest handelt es sich um den Brandtest gemäß EN ISO 11925-2 (2010).

Die erfindungsgemäßen Platten unterschreiten bei dem Brandtest gemäß EN ISO 11925-2 (2010) die im Rahmen der Baustoffklassifizierung gemäß DIN EN 13501-1 (2010) genannte Grenze hinsichtlich der Flammhöhe, die für Einstufung in Klasse B relevant ist. Die erfindungsgemäßen Platten zeigen somit im Gegensatz zu den Platten gemäß den Beispielen A bis F im Brandtest ein deutlich reduziertes Brandverhalten.

## Patentansprüche

1. Verfahren zur Herstellung einer zumindest zweilagigen Schaumstoffplatte durch Verkleben von mindestens einer dünneren thermoplastischen Schaumstoffplatte (TS) und mindestens einer dünneren duroplastischen Schaumstoffplatte (DS), wobei die dünnere duroplastische Schaumstoffplatte (DS) an zwei sich gegenüberliegenden Seiten jeweils eine Metalldeckschicht aufweist, wobei die dünnere thermoplastische Schaumstoffplatte (TS) und die dünnere duroplastische Schaumstoffplatte (DS) so miteinander verklebt werden, dass in der zumindest zweilagigen Schaumstoffplatte sich eine Metalldeckschicht zwischen der dünneren thermoplastischen Schaumstoffplatte (TS) und der dünneren duroplastischen Schaumstoffplatte (DS) befindet und wobei der Klebstoff, mit dem die dünnere thermoplastische Schaumstoffplatte (TS) und die dünnere duroplastische Schaumstoffplatte (DS) miteinander verklebt werden, mindestens eine anorganische Komponente enthält, wobei der Klebstoff mindestens 30 Gew.-%, bezogen auf das Gesamtgewicht des Klebstoffs, Kalziumoxid, Siliciumoxid und/oder Aluminiumoxid enthält.

2. Verfahren gemäß Anspruch 1, **dadurch gekennzeichnet, dass**
i) die mindestens eine anorganische Komponente ausgewählt ist aus der Gruppe bestehend aus Kalziumoxid, Siliciumoxid, Titanoxid, Aluminiumoxid, Eisenoxid, Magnesiumoxid, Natriumoxid, Kaliumoxid und Kalziumhydroxid, und/oder
ii) der Klebstoff mindestens 30 Gew.-%, bevorzugt mindestens 40 Gew.-%, mehr bevorzugt mindestens 50 Gew.-%, besonders bevorzugt mindestens 60 Gew.-%, bezogen auf das Gesamtgewicht des Klebstoffs, mindestens einer anorganischen Komponente enthält, und/oder
iii) der Klebstoff mindestens 40 Gew.-%, bevorzugt mindestens 50 Gew.-%, bezogen auf das Gesamtgewicht des Klebstoffs, Kalziumoxid, Siliciumoxid und/oder Aluminiumoxid enthält, und/oder
iv) der Klebstoff mindestens 15 Gew.-%, bevorzugt mindestens 20 Gew.-%, mehr bevorzugt mindestens 25 Gew.-%, besonders bevorzugt mindestens 30 Gew.-%, bezogen auf das Gesamtgewicht des Klebstoffs, Wasser enthält.

3. Verfahren gemäß Anspruch 1 oder 2, **dadurch gekennzeichnet, dass** der Klebstoff strukturiert, vorzugsweise punktförmig, linienförmig oder gitterförmig, insbesondere gitterförmig, auf mindestens eine Oberfläche der dünneren thermoplastischen Schaumstoffplatte (TS) und/oder auf mindestens eine Metalldeckschicht der dünneren duroplastischen Schaumstoffplatte (DS) aufgetragen wird.

4. Verfahren gemäß einem der Ansprüche 1 bis 3, **dadurch gekennzeichnet, dass**
i) die dünnere duroplastische Schaumstoffplatte (DS) eine Polyurethanschaumstoffplatte, bevorzugt eine Polyurethanhartschaumplatte ist, und/oder
ii) die dünnere duropfastische Schaumstoffplatte (DS) durch Umsetzung einer reaktiven Mischung enthaltend mindestens eine Komponente (K1) und mindestens eine Komponente (K2) erhalten wird, wobei die Komponente (K1) mindestens ein Isocyanat umfasst und die Komponente (K2) ausgewählt ist aus mindestens einem Polyetherpolyol, einem Polyesterpolyol oder einem Polyamin, und/oder
iii) die dünnere duroplastische Schaumstoffplatte (DS) eine Phenolharzschaumstoffplatte ist, und/oder
iv) die dünnere duroplastische Schaumstoffplatte (DS) aus einem geschlossenzelligen Material hergestellt ist.

5. Verfahren gemäß Anspruch 4, **dadurch gekennzeichnet, dass** das geschlossenzellige Material mindestens 80 Gew.-%, bevorzugt mindestens 90 Gew.-%, mehr bevorzugt mindestens 95 Gew.-%, geschlossene Zellen, bezogen auf die Gesamtzahl der Zellen in dem geschlossenzelligen Material, enthält.

6. Verfahren gemäß einem der Ansprüche 1 bis 5, **dadurch gekennzeichnet, dass** mindestens eine der Metalldeckschichten der dünneren duroplastischen Schaumstoffplatte (DS) Aluminium enthält,
i) vorzugsweise weist die dünnere duroplastische Schaumstoffplatte (DS) genau zwei Metalldeckschichten auf, die beide vollständig aus Aluminium hergestellt sind, und/oder
ii) vorzugsweise sind die genau zwei Metalldeckschichten jeweils auf den beiden flächenmäßig größten und sich gegenüberliegenden Seiten der dünneren duroplastischen Schaumstoffplatte (DS) aufgebracht, und/oder
iii) vorzugsweise ist mindestens eine, mehr bevorzugt jede, der Seiten der dünneren duroplastischen Schaumstoffplatte (DS), die keine Metalldeckschicht aufweisen, mit einer Schutzschicht versehen, insbesondere einer Epoxidharzschutzschicht.

7. Verfahren gemäß einem der Ansprüche 1 bis 6, **dadurch gekennzeichnet, dass** die dünnere duroplastische Schaumstoffplatte (DS) mindestens ein Treibmittel enthält, vorzugsweise ist das Treibmittel ein aliphatischer Kohlenwasserstoff oder ein halogenierter Kohlenwasserstoff, insbesondere ist das Treibmittel ausgewählt aus n-Pentan, iso-Pentan, Cyclopentan, einem fluorhaltigen Kohlenwasserstoff, einem chlorhaltigen Kohlenwasserstoff oder einem halogenierten Alken.

8. Verfahren gemäß einem der Ansprüche 1 bis 7, **dadurch gekennzeichnet, dass**
i) die dünnere duroplastische Schaumstoffplatte (DS) eine Wärmeleitfähigkeit λ ≤ 0,030 W/(mK), vorzugsweise ≤ 0,025 W/(mK), insbesondere ≤ 0,020 W/(mK), aufweist, und/oder
ii) die zumindest zweilagige Schaumstoffplatte eine Wärmeleitfähigkeit λ ≤ 0,035 W/(mK), vorzugsweise ≤ 0,030 W/(mK), insbesondere ≤ 0,025 W/(mK), aufweist.

9. Verfahren gemäß einem der Ansprüche 1 bis 8, **dadurch gekennzeichnet, dass** eine dreilagige Schaumstoffplatte hergestellt wird durch Verkleben von zwei dünneren thermoplastischen Schaumstoffplatten (TS) und einer dünneren duroplastischen Schaumstoffplatte (DS), die an zwei sich gegenüberliegenden Seiten jeweils eine Metalldeckschicht aufweist, wobei jeweils eine dünnere thermoplastische Schaumstoffplatte (TS) auf jeweils einer sich gegenüberliegenden Seite der dünneren duroplastischen Schaumstoffplatte (DS) unter Erhalt der dreilagigen Schaumstoffplatte aufgeklebt wird und sich jeweils eine Metalldeckschicht zwischen der jeweiligen dünneren thermoplastischen Schaumstoffplatte (TS) und der dünneren duroplastischen Schaumstoffplatte (DS) befindet.

10. Verfahren gemäß Anspruch 9, **dadurch gekennzeichnet, dass** eine vier- oder höherlagige Schaumstoffplatte hergestellt wird, wobei ausgehend von der dreilagigen Schaumstoffplatte eine zweite dünnere duroplastische Schaumstoffplatte (DS), die an zwei sich gegenüberliegenden Seiten jeweils eine Metalldeckschicht aufweist, auf eine von einer dünneren thermoplastischen Schaumstoffplatte (TS) stammenden Seite der dreilagigen Schaumstoffplatte aufgeklebt wird, die daraus erhaltene vierlagige Schaumstoffplatte abwechselnd insgesamt vier Lagen aus dünneren thermoplastischen Schaumstoffplatten (TS) und dünneren duroplastischen Schaumstoffplatten (DS) aufweist, sich jeweils eine Metalldeckschicht zwischen einer Lage aus dünnerer thermoplastischer Schaumstoffplatte (TS) und einer Lage aus dünnerer duroplastischer Schaumstoffplatte (DS) befindet und die erste und zweite dünnere duroplastische Schaumstoffplatte (DS) sich auf jeweils einer gegenüberliegenden Seite einer dünneren thermoplastischen Schaumstoffplatte (TS) befinden, wobei gegebenenfalls zum Erhalt von höherlagigen Schaumstoffplatten das abwechselnde Aufkleben einer weiteren dünneren thermoplastischen Schaumstoffplatte (TS) oder einer dünneren duroplastischen Schaumstoffplatte (DS), die an zwei sich gegenüberliegenden Seiten jeweils eine Metalldeckschicht aufweist, mindestens einfach wiederholt wird.

11. Verfahren gemäß einem der Ansprüche 1 bis 10, **dadurch gekennzeichnet, dass** die dünnere thermoplastische Schaumstoffplatte (TS) ein Partikelschaumstoff oder ein Extrusionsschaumstoff ist auf Basis mindestens eines Polymers, ausgewählt aus der Gruppe bestehend aus Polystyrol, Polystyrolcopolymeren, Polyethersulfon, Polysulfon, Polyethylenterephthalat, thermoplastischem Polyurethan, Polyolefinen, Polyolefincopolymeren und Acrylpolymeren, vorzugsweise ein Extrusionsschaumstoff auf Basis mindestens eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Extrusionsschaumstoff auf Basis mindestens eines Polymers, ausgewählt aus der Gruppe bestehend aus Polystyrol, Polystyrolcopolymeren und Polyethylenterephthalat.

12. Verfahren gemäß einem der Ansprüche 1 bis 11, **dadurch gekennzeichnet, dass**
i) die dünnere thermoplastische Schaumstoffplatte (TS) eine Länge (x-Richtung) von 500 bis 2800 mm, vorzugsweise von 1000 bis 1500 mm, eine Breite (y-Richtung) von 200 bis 1250 mm, vorzugsweise von 500 bis 900 mm, und eine Dicke (z-Richtung) von 5 bis 100 mm, vorzugsweise von 5 bis 50 mm, aufweist, und/oder
ii) die dünnere duroplastische Schaumstoffplatte (DS) eine Länge (x-Richtung) von 500 bis 2800 mm, vorzugsweise von 1000 bis 1500 mm, eine Breite (y-Richtung) von 200 bis 1250 mm, vorzugsweise von 500 bis 900 mm, und eine Dicke (z-Richtung) von 20 bis 200 mm, vorzugsweise von 40 bis 160 mm, aufweist, und/oder
iii) jede Metalldeckschicht eine Länge (x-Richtung) und eine Breite (y-Richtung) aufweist, die identisch ist mit den entsprechenden Werten der dünneren duroplastischen Schaumstoffplatte (DS), die Dicke (z-Richtung) jedoch 0,01 bis 0,1 mm, vorzugsweise 0,02 bis 0,06 mm, beträgt, und/oder
iv) jede dünnere thermoplastische Schaumstoffplatte (TS), jede dünnere duroplastische Schaumstoffplatte (DS) und jede Metalldeckschicht identische Werte für die Länge (x-Richtung) und die Breite (y-Richtung) aufweisen.

13. Zumindest zweilagige Schaumstoffplatte erhältlich nach einem Verfahren gemäß einem der Ansprüche 1 bis 12.

14. Verwendung einer zumindest zweilagigen Schaumstoffplatte gemäß Anspruch 13 als Dämmmaterial für die Außenwand eines Bauwerks.

15. Außenwand eines Bauwerks, auf die eine zumindest zweilagige Platte gemäß Anspruch 13 aufgebracht ist, vorzugsweise ist die zumindest zweilagige Platte so auf die Außenwand aufgebracht, dass eine flächenmäßig größte Seite (xy-Ebene) einer dünneren thermoplastischen Ausgangsplatte (TS) mit der Außenwand des Bauwerks verbunden ist.

## Claims

1. A process for the production of an at least two-layer foam sheet via adhesive bonding of at least one thinner thermoplastic foam sheet (TS) and at least one thinner thermoset foam sheet (DS), where the thinner thermoset foam sheet (DS) has a metal outer layer on each of two opposite sides, where the thinner thermoplastic foam sheet (TS) and the thinner thermoset foam sheet (DS) are adhesive-bonded to one another in a manner such that in the at least two-layer foam sheet there is a metal outer layer between the thinner thermoplastic foam sheet (TS) and the thinner thermoset foam sheet (DS), and where the adhesive with which the thinner thermoplastic foam sheet (TS) and the thinner thermoset foam sheet (DS) are adhesive-bonded to one another comprises at least one inorganic component, where the adhesive comprises at least 30% by weight, based on the total weight of the adhesive, of calcium oxide, silicon oxide and/or aluminum oxide.

2. The process according to claim 1, wherein
i) the at least one inorganic component is selected from the group consisting of calcium oxide, silicon oxide, titanium oxide, aluminum oxide, iron oxide, magnesium oxide, sodium oxide, potassium oxide and calcium hydroxide, and/or
ii) the adhesive comprises at least 30% by weight, preferably at least 40% by weight, more preferably at least 50% by weight, particularly preferably at least 60% by weight, based on the total weight of the adhesive, of at least one inorganic component, and/or
iii) the adhesive comprises at least 40% by weight, preferably at least 50% by weight, based on the total weight of the adhesive, of calcium oxide, silicon oxide and/or aluminum oxide, and/or
iv) the adhesive comprises at least 15% by weight of water, preferably at least 20% by weight, more preferably at least 25% by weight, particularly preferably at least 30% by weight, based on the total weight of the adhesive.

3. The process according to claim 1 or 2, wherein the adhesive is applied in structured form, preferably in the form of dots, of lines or of a grid, in particular in the form of a grid, to at least one surface of the thinner thermoplastic foam sheet (TS) and/or to at least one metal outer layer of the thinner thermoset foam sheet (DS).

4. The process according to any of claims 1 to 3, wherein
i) the thinner thermoset foam sheet (DS) is a polyurethane foam sheet, preferably a rigid polyurethane foam sheet, and/or
ii) the thinner thermoset foam sheet (DS) is obtained via reaction of a reactive mixture comprising at least one component (K1) and at least one component (K2), where component (K1) comprises at least one isocyanate and component (K2) is selected from at least one polyether polyol, one polyester polyol or one polyamine, and/or
iii) the thinner thermoset foam sheet (DS) is a phenolic resin foam sheet, and/or
iv) the thinner thermoset foam sheet (DS) has been produced from a closed-cell material.

5. The process according to claim 4, wherein the closed-cell material comprises at least 80% by weight of closed cells, preferably at least 90% by weight, more preferably at least 95% by weight, based on the total number of cells in the closed-cell material.

6. The process according to any of claims 1 to 5, wherein at least one of the metal outer layers of the thinner thermoset foam sheet (DS) comprises aluminum,
i) preferably the thinner thermoset foam sheet (DS) has precisely two metal outer layers, both of which have been produced entirely from aluminum, and/or
ii) preferably the precisely two metal outer layers have respectively been applied on the two largest-area opposite sides of the thinner thermoset foam sheet (DS), and/or
iii) preferably a protective layer, in particular an epoxy resin protective layer, has been provided to at least one, more preferably each, of the sides of the thinner thermoset foam sheet (DS), that have no metal outer layer.

7. The process according to any of claims 1 to 6, wherein the thinner thermoset foam sheet (DS) comprises at least one blowing agent, which is preferably an aliphatic hydrocarbon or a halogenated hydrocarbon, the blowing agent in particular being selected from n-pentane, isopentane, cyclopentane, a fluorinated hydrocarbon, a chlorinated hydrocarbon and a halogenated alkene.

8. The process according to any of claims 1 to 7, wherein
i) the thermal conductivity λ of the thinner thermoset foam sheet (DS) is ≤ 0.030 W/(mK), preferably ≤ 0.025 W/(mK), in particular ≤ 0.020 W/(mK), and/or
ii) the thermal conductivity λ of the at least two-layer foam sheet is ≤ 0.035 W/(mK), preferably ≤ 0.030 W/(mK), in particular ≤ 0.025 W/(mK).

9. The process according to any of claims 1 to 8, wherein a three-layer foam sheet is produced via adhesive bonding of two thinner thermoplastic foam sheets (TS) and of one thinner thermoset foam sheet (DS) which has a metal outer layer on each of two opposite sides, where in each case a thinner thermoplastic foam sheet (TS) is adhesive-bonded on each of the opposite sides of the thinner thermoset foam sheet (DS) to give the three-layer foam sheet, and between each thinner thermoplastic foam sheet (TS) and the thinner thermoset foam sheet (DS) there is in each case a metal outer layer.

10. The process according to claim 9, wherein a foam sheet having four or more layers is produced, where, starting from the three-layer foam sheet, a second thinner thermoset foam sheet (DS), which has a metal outer layer on each of two opposite sides, is adhesive-bonded to a side provided by a thinner thermoplastic foam sheet (TS) in the three-layer foam sheet, the resultant four-layer foam sheet has, in alternation, a total of four layers made of thinner thermoplastic foam sheets (TS) and of thinner thermoset foam sheets (DS), there is in each case a metal outer layer between a layer made of thinner thermoplastic foam sheet (TS) and a layer made of thinner thermoset foam sheet (DS), and the first and second thinner thermoset foam sheet (DS) are each present on one of the opposite sides of a thinner thermoplastic foam sheet (TS), where optionally alternating application, by adhesive bonding, of a further thinner thermoplastic foam sheet (TS) or of a thinner thermoset foam sheet (DS), which has a metal outer layer on each of two opposite sides, is repeated at least once in order to obtain foam sheets having a larger number of layers.

11. The process according to any of claims 1 to 10, wherein the thinner thermoplastic foam sheet (TS) is a molded foam or an extruded foam based on at least one polymer selected from the group consisting of polystyrene, polystyrene copolymers, polyether sulfone, polysulfone, polyethylene terephthalate, thermoplastic polyurethane, polyolefins, polyolefin copolymers and acrylic polymers, preferably an extruded foam based on at least one polymer selected from the group consisting of polystyrene, polystyrene copolymers, polyether sulfone, polysulfone, thermoplastic polyurethane and polyethylene terephthalate, most preferably an extruded foam based on at least one polymer selected from the group consisting of polystyrene, polystyrene copolymers and polyethylene terephthalate.

12. The process according to any of claims 1 to 11, wherein
i) the length (x-direction) of the thinner thermoplastic foam sheet (TS) is from 500 to 2800 mm, preferably from 1000 to 1500 mm, the width (y-direction) thereof is from 200 to 1250 mm, preferably from 500 to 900 mm, and the thickness (z-direction) thereof is from 5 to 100 mm, preferably from 5 to 50 mm, and/or
ii) the length (x-direction) of the thinner thermoset foam sheet (DS) is from 500 to 2800 mm, preferably from 1000 to 1500 mm, the width (y-direction) thereof is from 200 to 1250 mm, preferably from 500 to 900 mm, and the thickness (z-direction) thereof is from 20 to 200 mm, preferably from 40 to 160 mm, and/or
iii) the length (x-direction) and the width (y-direction) of each metal outer layer is the same as the corresponding values of the thinner thermoset foam sheet (DS), but the thickness (z-direction) is from 0.01 to 0.1 mm, preferably from 0.02 to 0.06 mm, and/or
iv) values for the length (x-direction) and for the width (y-direction) are the same for each thinner thermoplastic foam sheet (TS), each thinner thermoset foam sheet (DS) and each metal outer layer.

13. An at least two-layer foam sheet obtainable by a process according to any of claims 1 to 12.

14. The use of an at least two-layer foam sheet according to claim 13 as insulation material for the external wall of a building.

15. An external wall of a building, where an at least two-layer sheet according to claim 13 has been applied to said wall, the manner of application of the at least two-layer sheet to the external wall preferably being such that a largest-area side (xy-plane) of a thinner thermoplastic starting-component sheet (TS) has been bonded to the external wall of the building.

## Revendications

1. Procédé pour la fabrication d'une plaque de mousse à au moins deux couches, par collage d'au moins une plaque de mousse thermoplastique (TS) plus mince et d'au moins une plaque de mousse thermodurcissable (DS) plus mince, la plaque de mousse thermodurcissable (DS) plus mince présentant à chaque fois une couche de recouvrement métallique sur deux faces opposées l'une à l'autre, la plaque de mousse thermoplastique (TS) plus mince et la plaque de mousse thermodurcissable (DS) plus mince étant collées l'une à l'autre de manière telle qu'une couche de recouvrement métallique se situe, dans la plaque de mousse à au moins deux couches, entre la plaque de mousse thermoplastique (TS) plus mince et la plaque de mousse thermodurcissable (DS) plus mince et l'adhésif, avec lequel la plaque de mousse thermoplastique (TS) plus mince et la plaque de mousse thermodurcissable (DS) plus mince sont collées l'une à l'autre, contenant au moins un composant inorganique, l'adhésif contenant au moins 30% en poids, par rapport au poids total de l'adhésif, d'oxyde de calcium, d'oxyde de silicium et/ou d'oxyde d'aluminium.

2. Procédé selon la revendication 1, **caractérisé en ce que**
i) ledit au moins un composant inorganique est choisi dans le groupe constitué par l'oxyde de calcium, l'oxyde de silicium, l'oxyde de titane, l'oxyde d'aluminium, l'oxyde de fer, l'oxyde de magnésium, l'oxyde de sodium, l'oxyde de potassium et/ou l'hydroxyde de calcium et/ou
ii) l'adhésif contient au moins 30% en poids, de préférence au moins 40% en poids, plus préférablement au moins 50% en poids, de manière particulièrement préférée au moins 60% en poids, par rapport au poids total de l'adhésif, d'au moins un composant inorganique et/ou
iii) l'adhésif contient au moins 40% en poids, de préférence au moins 50% en poids, par rapport au poids total de l'adhésif, d'oxyde de calcium, d'oxyde de silicium et/ou d'oxyde d'aluminium et/ou
iv) l'adhésif contient au moins 15% en poids, de préférence au moins 20% en poids, plus préférablement au moins 25% en poids, de manière particulièrement préférée au moins 30% en poids, par rapport au poids total de l'adhésif, d'eau.

3. Procédé selon la revendication 1 ou 2, **caractérisé en ce que** l'adhésif est appliqué sous forme structurée, de préférence sous forme ponctuelle, en ligne ou en grille, en particulier en grille, sur au moins une surface de la plaque de mousse thermoplastique (TS) plus mince et/ou sur au moins une couche de recouvrement métallique de la plaque de mousse thermodurcissable (DS) plus mince.

4. Procédé selon l'une quelconque des revendications 1 à 3, **caractérisé en ce que**
i) la plaque de mousse thermodurcissable (DS) plus mince est une plaque de mousse de polyuréthane, de préférence une plaque de mousse dure de polyuréthane et/ou
ii) la plaque de mousse thermodurcissable (DS) plus mince est obtenue par transformation d'un mélange réactif contenant au moins un composant (K1) et au moins un composant (K2), le composant (K1) comprenant au moins un isocyanate et le composant (K2) étant choisi parmi au moins un polyétherpolyol, un polyesterpolyol ou une polyamine et/ou
iii) la plaque de mousse thermodurcissable (DS) plus mince est une plaque de mousse de résine phénolique et/ou
iv) la plaque de mousse thermodurcissable (DS) plus mince est fabriquée à partir d'un matériau à cellules fermées.

5. Procédé selon la revendication 4, **caractérisé en ce que** le matériau à cellules fermées contient au moins 80% en poids, de préférence au moins 90% en poids, plus préférablement au moins 95% en poids de cellules fermées, par rapport au nombre total de cellules dans le matériau à cellules fermées.

6. Procédé selon l'une quelconque des revendications 1 à 5, **caractérisé en ce qu'**au moins l'une des couches de recouvrement métallique de la plaque de mousse thermodurcissable (DS) plus mince contient de l'aluminium,
i) de préférence, la plaque de mousse thermodurcissable (DS) plus mince présente exactement deux couches de recouvrement métallique qui sont toutes les deux complètement fabriquées en aluminium et/ou
ii) de préférence, lesdites exactement deux couches de recouvrement métallique sont appliquées chacune sur les deux faces à superficie la plus grande et opposées l'une à l'autre de la plaque de mousse thermodurcissable (DS) plus mince et/ou
iii) de préférence, au moins l'une, plus préférablement chacune, des faces de la plaque de mousse thermodurcissable (DS) plus mince qui ne présente pas de couche de recouvrement métallique est pourvue d'une couche de protection, en particulier d'une couche de protection en résine époxyde.

7. Procédé selon l'une quelconque des revendications 1 à 6, **caractérisé en ce que** la plaque de mousse thermodurcissable (DS) plus mince contient au moins un agent gonflant, de préférence, l'agent gonflant est un hydrocarbure aliphatique ou un hydrocarbure halogéné, en particulier, l'agent gonflant est choisi parmi le n-pentane, l'isopentane, le cyclopentane, un hydrocarbure fluoré, un hydrocarbure chloré ou un alcène halogéné.

8. Procédé selon l'une quelconque des revendications 1 à 7, **caractérisé en ce que**
i) la plaque de mousse thermodurcissable (DS) plus mince présente une conductibilité thermique λ ≤ 0,030 W/(mK), de préférence ≤ 0,025 W/(mK), en particulier ≤ 0,020 W/(mK) et/ou
ii) la plaque de mousse à au moins deux couches présente une conductibilité thermique λ ≤ 0,035 W/(mK), de préférence ≤ 0, 030 W/(mK), en particulier ≤ 0, 025 W/(mK).

9. Procédé selon l'une quelconque des revendications 1 à 8, **caractérisé en ce qu'**une plaque de mousse à trois couches est fabriquée par collage de deux plaques de mousse thermoplastique (TS) plus minces et d'une plaque de mousse thermodurcissable (DS) plus mince, qui présente à chaque fois une couche de recouvrement métallique sur deux faces opposées l'une à l'autre, à chaque fois une plaque de mousse thermoplastique (TS) plus mince étant collée sur à chaque fois une face opposée de la plaque de mousse thermodurcissable (DS) plus mince avec obtention de la plaque de mousse à trois couches et à chaque fois une couche de recouvrement métallique se trouvant entre chaque plaque de mousse thermoplastique (TS) plus mince et la plaque de mousse thermodurcissable (DS) plus mince.

10. Procédé selon la revendication 9, **caractérisé en ce qu'**une plaque de mousse à quatre couches ou plus est fabriquée, où, partant de la plaque de mousse à trois couches, une deuxième plaque de mousse thermodurcissable (DS) plus mince, qui présente à chaque fois une couche de recouvrement métallique sur deux faces opposées l'une à l'autre, est collée sur une face provenant d'une plaque de mousse thermoplastique (TS) plus mince de la plaque de mousse à trois couches, la plaque de mousse à quatre couches ainsi obtenue présentant en alternance au total quatre couches de plaques de mousse thermoplastique (TS) plus minces et de plaques de mousse thermodurcissable (DS) plus minces, à chaque fois une couche de recouvrement métallique se trouvant entre une couche de plaque de mousse thermoplastique (TS) plus mince et une couche de plaque de mousse thermodurcissable (DS) plus mince et la première et la deuxième plaque de mousse thermodurcissable (DS) plus minces se trouvant sur à chaque fois une face opposée d'une plaque de mousse thermoplastique (TS) plus mince, où, le cas échéant, pour obtenir des plaques de mousse à un nombre de couches supérieur, le collage en alternance d'une autre plaque de mousse thermoplastique (TS) plus mince ou d'une plaque de mousse thermodurcissable (DS) plus mince, qui présente à chaque fois une couche de recouvrement métallique sur deux faces opposées l'une à l'autre, est répété au moins une fois.

11. Procédé selon l'une quelconque des revendications 1 à 10, **caractérisé en ce que** la plaque de mousse thermoplastique (TS) plus mince est une mousse particulaire ou une mousse d'extrusion à base d'au moins un polymère, choisi dans le groupe constitué par le polystyrène, les copolymères de polystyrène, la polyéthersulfone, la polysulfone, le poly(téréphtalate d'éthylène), le polyuréthane thermoplastique, les polyoléfines, les copolymères oléfiniques et les polymères d'acryle, de préférence une mousse d'extrusion à base d'au moins un polymère, choisi dans le groupe constitué par le polystyrène, les copolymères de polystyrène, la polyéthersulfone, la polysulfone, le polyuréthane thermoplastique et le poly(téréphtalate d'éthylène), le plus préférablement une mousse d'extrusion à base d'au moins un polymère, choisi dans le groupe constitué par le polystyrène, les copolymères de polystyrène et le poly(téréphtalate d'éthylène).

12. Procédé selon l'une quelconque des revendications 1 à 11, **caractérisé en ce que**
i) la plaque de mousse thermoplastique (TS) plus mince présente une longueur (direction x) de 500 à 2800 mm, de préférence de 1000 à 1500 mm, une largeur (direction y) de 200 à 1250 mm, de préférence de 500 à 900 mm et une épaisseur (direction z) de 5 à 100 mm, de préférence de 5 à 50 mm et/ou
ii) la plaque de mousse thermodurcissable (DS) plus mince présente une longueur (direction x) de 500 à 2800 mm, de préférence de 1000 à 1500 mm, une largeur (direction y) de 200 à 1250 mm, de préférence de 500 à 900 mm et une épaisseur (direction z) de 20 à 200 mm, de préférence de 40 à 160 mm et/ou
iii) chaque couche de recouvrement métallique présente une longueur (direction x) et une largeur (direction y) qui est identique aux valeurs correspondantes de la plaque de mousse thermodurcissable (DS) plus mince, l'épaisseur (direction z) étant cependant de 0,01 à 0,1 mm, de préférence de 0,02 à 0,06 mm et/ou
iv) chaque plaque de mousse thermoplastique (TS) plus mince, chaque plaque de mousse thermodurcissable (DS) plus mince et chaque couche de recouvrement métallique présentant des valeurs identiques pour la longueur (direction x) et la largeur (direction y).

13. Plaque de mousse à au moins deux couches pouvant être obtenue selon un procédé selon l'une quelconque des revendications 1 à 12.

14. Utilisation d'une plaque de mousse à au moins deux couches selon la revendication 13 comme matériau isolant pour la paroi externe d'une construction.

15. Paroi externe d'une construction sur laquelle est appliquée une plaque à au moins deux couches selon la revendication 13, de préférence, la plaque à au moins deux couches est appliquée sur la couche externe de manière telle qu'une face à superficie la plus grande (plan xy) d'une plaque de départ thermoplastique (TS) plus mince est reliée à la paroi externe de la construction.
